(19) Europäisches Patentamt
European Patent Office
Office européen des brevets

(11) EP 4 715 004 A1

(12) EUROPEAN PATENT APPLICATION
published in accordance with Art. 153(4) EPC

(43) Date of publication:
**25.03.2026 Bulletin 2026/13**

(21) Application number: **24807224.1**

(22) Date of filing: **15.05.2024**

(51) International Patent Classification (IPC):
***C08J 5/18*** (2006.01) ***B29C 51/10*** (2006.01)
***B32B 27/40*** (2006.01) ***C08G 18/08*** (2006.01)
***C08G 18/38*** (2006.01) ***C08G 18/73*** (2006.01)
***C08G 18/75*** (2006.01) ***C08G 18/76*** (2006.01)
***G02B 1/04*** (2006.01) ***G02C 7/00*** (2006.01)
***G02C 7/02*** (2006.01)

(52) Cooperative Patent Classification (CPC):
**B29C 51/10; B32B 27/40; C08G 18/08; C08G 18/38; C08G 18/73; C08G 18/75; C08G 18/76; C08J 5/18; G02B 1/04; G02C 7/00; G02C 7/02**

(86) International application number:
**PCT/JP2024/017943**

(87) International publication number:
**WO 2024/237273 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023 JP 2023081879**
**17.05.2023 JP 2023081880**
**29.09.2023 JP 2023170313**

(71) Applicant: **Mitsui Chemicals, Inc.**
**Tokyo 104-0028 (JP)**

(72) Inventors:
- **HIROSHIGE Seiya**
**Omuta-shi, Fukuoka 836-8610 (JP)**
- **WATANABE Makoto**
**Omuta-shi, Fukuoka 836-8610 (JP)**

(74) Representative: **Hoffmann Eitle**
**Patent- und Rechtsanwälte PartmbB**
**Arabellastraße 30**
**81925 München (DE)**

# (54) THIOURETHANE FILM, ROLL, LENS, GLASSES, METHOD FOR PRODUCING (THIO) URETHANE RESIN FILM, AND METHOD FOR PRODUCING MULTILAYER LENS

(57) A thiourethane film containing: a cured product of a photopolymerizable composition containing a bifunctional or higher polythiol (A), an isocyanate compound (B), and a photopolymerization initiator (C), in which a product E' × T of a storage elastic modulus E' at 40°C and a thickness T of the thiourethane film is 50 MPa·mm or more and 1800 MPa·mm or less.

EP 4 715 004 A1

[Fig.1]

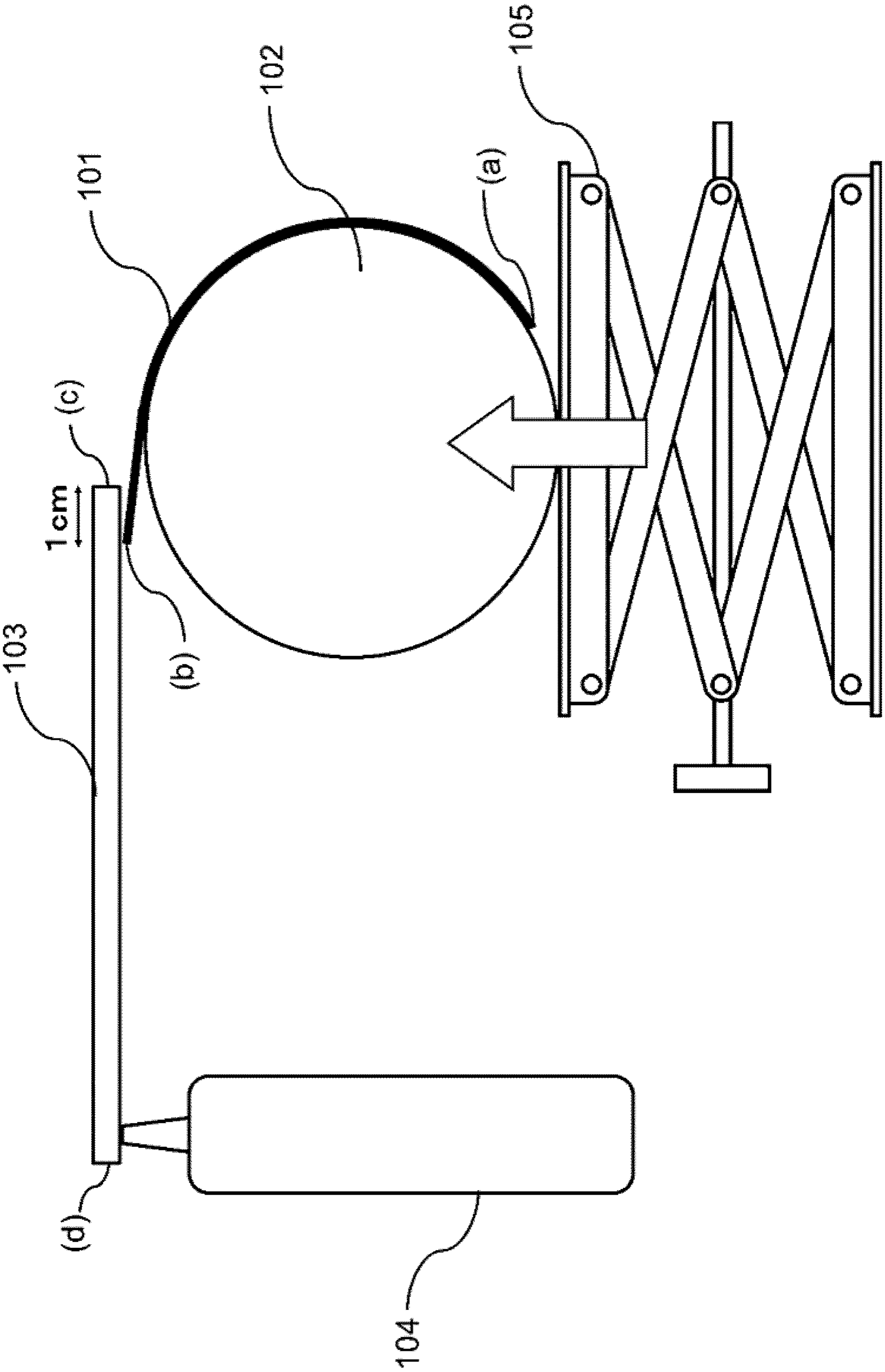

## Description

### TECHNICAL FIELD

The present invention relates to a thiourethane film, a roll, a lens, glasses, a method for producing a (thio) urethane-based resin film, and a method for producing a laminated lens.

### BACKGROUND ART

"Functional layers formed of polymerizable compositions are sometimes used on lens substrates for spectacle lenses. Patent Document 1 is an example of a document relating to a functional layer formed of such a polymerizable composition.

Patent Document 1 discloses a molding method for a transparent resin laminate including a functional resin layer on at least one surface of a transparent resin substrate, the molding method including: (1) a first step of preparing a seat mold having a concave surface corresponding to a lower surface of the transparent resin substrate and dropwise adding a monomer (including a prepolymer, the same applies hereinafter) of a thermocurable molding material that required to form the functional resin layer onto the concave surface; (2) a second step of exposing an assembly in which a transparent resin substrate is placed on the dropwise added monomer to a gelable temperature atmosphere of the molding material for a predetermined time to diffuse the monomer over the lower surface of the transparent resin substrate and further gel the monomer to shape the monomer while degassing between the seat mold and the transparent resin substrate; and (3) a third step of curing and releasing a gel-like shape-formed article in the assembly after the second step (claim 1 of Patent Document 1). In addition, Patent Document 1 discloses a molding material composition for the functional resin layer or the upper and lower transparent resin layers used in the molding method, the molding material composition being a thiourethane-based resin composition in which an NCO component consists of or mainly consists of an alicyclic diisocyanate, an average number of functional groups of an SH component is 3.0 or more, and EOPO or an EOPO chain-containing polyol thereof is contained as a modifying component, and the viscosity of the monomer after the dropwise addition is adjusted to be the diffusable viscosity when the transparent resin substrate is placed (claim 8 of Patent Document 1).

Patent Document 1 describes that, according to the molding method, it is possible to provide a molding method for a transparent resin laminate which does not require an adhesive tape or a gasket for forming a cavity of a functional resin layer, and which is expected to reduce the number of steps, can suppress the generation of waste by-products, and improves the adhesiveness of the functional resin layer to a transparent resin substrate.

### RELATED DOCUMENT

### PATENT DOCUMENT

Patent Document 1: Japanese Unexamined Patent Publication No. 2022-158759

### SUMMARY OF THE INVENTION

### TECHNICAL PROBLEM

The present invention provides a method for producing a thiourethane film and a (thio)urethane-based resin film with improved winding properties.

### SOLUTION TO PROBLEM

The present invention is represented, for example, as follows.

[1] A thiourethane film containing: a cured product of a photopolymerizable composition containing a bifunctional or higher polythiol (A), an isocyanate compound (B), and a photopolymerization initiator (C), in which a product E' × T of a storage elastic modulus E' at 40°C and a thickness T of the thiourethane film is 50 MPa·mm or more and 1800 MPa·mm or less.

[2] The thiourethane film according to [1], in which a restoring force measured under the following <Conditions> is 40.0 N/m or less.

<Conditions>

The thiourethane film is cut into a strip shape having a width of 1 cm and a length of 12 cm, one end (a) of the thiourethane film is fixed to a resin cylinder having an outer diameter of 10 cm with an adhesive tape, and the thiourethane film is wound around the resin cylinder. Next, a plate having a width of 1 cm and a length of 15 cm is installed horizontally such that it contacts one end (b) of the thiourethane film opposite to the one end (a). Next, one end (c) of the plate is overlapped by 1 cm in the length direction with the end portion of the thiourethane film on one end (b) side, and one end (d) of the plate opposite to the one end (c) is installed to be in contact with an upper side of a measurement axis of a digital force gauge. The plate is installed such that a portion of 7.5 cm from the one end (d) is fixed with clay and the plate is movable with a point fixed with the clay as a fulcrum. Next, a value G (g) of the digital force gauge when the thiourethane film is raised along a lower side of the plate by raising a height of the resin cylinder, the plate and a tangent of an outer circumference of the resin cylinder overlap each other, and a portion of 1 cm where the plate and the thiourethane film overlap each other is completely adhered is read, and the restoring force (N/m) of the thiourethane film is calculated using Equation (1).

$$\text{Restoring force (N/m)} = (G\ (g) \times 9.80665/1000) \times 100 \qquad \text{Equation (1):}$$

9.80665 in Equation (1) represents gravitational acceleration ($m/s^2$).

[3] The thiourethane film according to [1] or [2], further containing: a boron element.
[4] The thiourethane film according to [3], in which a boron element content in the thiourethane film is 5 ppm or more and 200 ppm or less.
[5] The thiourethane film according to any one of [1] to [4], in which the photopolymerization initiator (C) contains boron.
[6] The thiourethane film according to any one of [1] to [5], in which the photopolymerization initiator (C) includes a base generator consisting of an organic boron anion and a counter cation.
[7] The thiourethane film according to [6], in which the base generator includes one or two or more selected from the group consisting of a compound represented by Formula (1) and a compound represented by Formula (2).

[chem. 1]

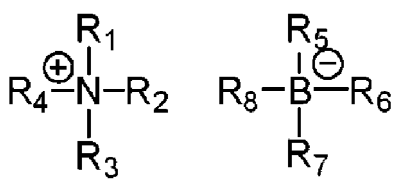

(1)

(In Formula (1), $R_1$ to $R_4$ each independently represent an alkyl group having 1 to 8 carbon atoms, $R_5$ to $R_8$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.)

[chem. 2]

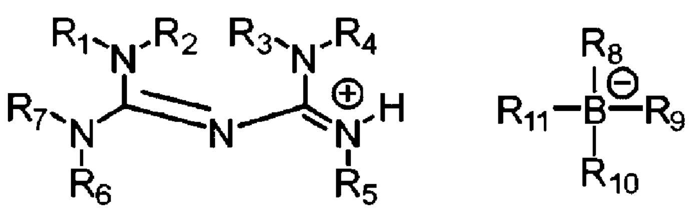

(2)

(In Formula (2), $R_1$ to $R_7$ each independently represent an alkyl group having 1 to 8 carbon atoms or a cycloalkyl group having 3 to 8 carbon atoms, $R_8$ to $R_{11}$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.)

[8] The thiourethane film according to any one of [1] to [7], in which a content of the photopolymerization initiator (C) is 250 ppm by mass or more with respect to a total amount of the bifunctional or higher polythiol (A) and the isocyanate compound (B) .

[9] The thiourethane film according to any one of [1] to [8], in which a total of a content of the bifunctional or higher polythiol (A) and a content of the isocyanate compound (B) is 50% by mass or more and less than 100% by mass when the entire photopolymerizable composition is 100% by mass.

[10] The thiourethane film according to any one of [1] to [9], in which the photopolymerizable composition further contains a metal catalyst (D).

[11] The thiourethane film according to any one of [1] to [10], in which the thiourethane film is obtained by polymerizing a part of the photopolymerizable composition by irradiating the photopolymerizable composition with ultraviolet rays and then further polymerizing the photopolymerizable composition by heating.

[12] The thiourethane film according to any one of [1] to [11], in which the thickness T is 50 $\mu$m or more and 3000 $\mu$m or less.

[13] The thiourethane film according to any one of [1] to [12], in which the bifunctional or higher polythiol (A) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

[14] The thiourethane film according to any one of [1] to [13], in which the isocyanate compound (B) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

[15] The thiourethane film according to any one of [1] to [14], in which an equivalent ratio (thiol group/isocyanato group) of a thiol group in the bifunctional or higher polythiol (A) to an isocyanato group in the isocyanate compound (B) is 0.8 or more and 1.2 or less.

[16] The thiourethane film according to any one of [1] to [15], in which the bifunctional or higher polythiol (A) includes a bifunctional thiol and a trifunctional or higher polythiol.

[17] The thiourethane film according to any one of [1] to [16], further containing: one or two or more selected from the group consisting of a hard coat layer and an anti-reflection layer.

[18] The thiourethane film according to any one of [1] to [17], in which a water contact angle of a surface of the thiourethane film is 50.0° or more and 90.0° or less.

[19] The thiourethane film according to any one of [1] to [18], further containing: an adhesive layer on one surface of the thiourethane film.

[20] A roll containing: the thiourethane film according to any one of [1] to [19]; and a core, in which the thiourethane film is wound in a roll shape around the core.

[21] A lens containing: the thiourethane film according to any one of [1] to [19].

[22] The lens according to [21], in which the thiourethane film and a lens substrate are in direct contact with each other.

[23] Glasses including: the lens according to [21] or [22].

[24] A method for producing a (thio)urethane-based resin film, including: a first polymerization step of irradiating a film consisting of a photopolymerizable composition which contains an active-hydrogen compound, an isocyanate compound, a photopolymerization initiator, and a metal catalyst and is provided on a substrate with ultraviolet rays to polymerize a part of the photopolymerizable composition; and a second polymerization step of heating the photopolymerizable composition after the first polymerization step to further polymerize the photopolymerizable composition.

[25] The method for producing a (thio)urethane-based resin film according to [24], further including: a viscosity adjustment step of adjusting a viscosity of a mixed solution A containing the active-hydrogen compound, the isocyanate compound, and the metal catalyst to 50 mPa·s or more and 2000 mPa·s or less.

[26] The method for producing a (thio)urethane-based resin film according to [25], further including: a step of mixing the mixed solution A with a mixed solution B containing the isocyanate compound and the photopolymerization

initiator after the viscosity adjustment step.

[27] The method for producing a (thio)urethane-based resin film according to any one of [24] to [26], in which the substrate is a release film.

[28] The method for producing a (thio)urethane-based resin film according to [27], in which the release film includes at least one selected from the group consisting of polyethylene terephthalate and a fluororesin.

[29] The method for producing a (thio)urethane-based resin film according to any one of [24] to [28], in which the (thio) urethane-based resin film further includes a protective film on a surface opposite to the substrate.

[30] A method for producing a laminated lens, including: a step of obtaining a (thio)urethane-based resin film by the method for producing a (thio)urethane-based resin film according to any one of [24] to [29]; and a step of bonding the obtained (thio)urethane-based resin film to a lens substrate.

[31] The method for producing a laminated lens according to [30], in which the lens substrate includes at least one selected from the group consisting of poly(meth)acrylate, polyethylene terephthalate, polycarbonate, polytriacetyl cellulose, polyvinyl alcohol, polyester, polyamide, polyepoxy, polyepisulfide, polyurethane, and polythiourethane.

[32] The method for producing a laminated lens according to [30] or [31], in which in the bonding step, the (thio) urethane-based resin film is bonded to the lens substrate by one or two selected from the group consisting of vacuum forming and pressure forming.

## ADVANTAGEOUS EFFECTS OF INVENTION

According to the present invention, it is possible to provide a method for producing a thiourethane film and a (thio) urethane-based resin film with improved winding properties.

## BRIEF DESCRIPTION OF THE DRAWINGS

[FIG. 1] A schematic view showing a state of measurement of a restoring force (at the start of a test).

[FIG. 2] A schematic view showing a state of measuring a restoring force (in a case of reading a digital force gauge).

## DESCRIPTION OF EMBODIMENTS

Hereinafter, the present invention will be described based on the embodiments. In the present embodiments, unless otherwise specified, "A to B" that indicates a range of numerical values represents "equal to or greater than A and equal to or smaller than B". In addition, when a numerical value range is described in a stepwise manner, the upper limit and the lower limit of each numerical value range can be optionally combined.

In the present embodiment, the "film" is a concept including those generally referred to as "sheet".

In the present embodiment, the thiourethane represents a compound having a thiourethane bond formed by a reaction between a polythiol component and an isocyanate component.

## <Thiourethane Film>

The thiourethane film of the present embodiment is a thiourethane film containing a cured product of a photopolymerizable composition containing a bifunctional or higher polythiol (A), an isocyanate compound (B), and a photopolymerization initiator (C), in which a product $E' \times T$ of a storage elastic modulus E' at 40°C and a thickness T of the thiourethane film is 50 MPa·mm or more and 1800 MPa·mm or less.

According to the studies of the present inventors, it has been found that, when a thiourethane film is produced using a photopolymerizable composition containing a specific polythiol, an isocyanate compound, and a photopolymerization initiator, and a product $E' \times T$ of a storage elastic modulus E' of the thiourethane film at 40°C and a thickness T of the thiourethane film is set to be within a specific range, the winding property of the thiourethane film is improved.

From the viewpoint of further improving the performance balance of the winding property, the blocking property, and the releasability of the protective film described later, the product $E' \times T$ of the storage elastic modulus E' of the thiourethane film of the present embodiment at 40°C and the thickness T of the thiourethane film is 50 MPa·mm or more, preferably 100 MPa·mm or more, more preferably 300 MPa·mm or more, still more preferably 500 MPa·mm or more, still more preferably 700 MPa·mm or more, and still more preferably 800 MPa·mm or more, and from the viewpoint of further improving the winding property of the thiourethane film, the product $E' \times T$ is 1800 MPa·mm or less, preferably 1600 MPa·mm or less, more preferably 1400 MPa·mm or less, still more preferably 1200 MPa·mm or less, and still more preferably 1150 MPa·mm or less.

In addition, from the viewpoint of further improving the performance balance of the winding property, the blocking

property, and the releasability of the protective film described later, the product E' × T of the storage elastic modulus E' of the thiourethane film of the present embodiment at 40°C and the thickness T of the thiourethane film is 50 MPa·mm or more and 1800 MPa·mm or less, preferably 100 MPa·mm or more and 1600 MPa·mm or less, more preferably 300 MPa·mm or more and 1600 MPa·mm or less, still more preferably 500 MPa·mm or more and 1400 MPa·mm or less, even still more preferably 700 MPa·mm or more and 1200 MPa·mm or less, and even still more preferably 800 MPa·mm or more and 1150 MPa·mm or less.

From the viewpoint of further improving the winding properties of the thiourethane film, the storage elastic modulus **E'** of the thiourethane film at 40°C is preferably 1500 MPa or more, more preferably 2000 MPa or more, and still more preferably 2300 MPa or more, and is preferably 8000 MPa or less, more preferably 7500 MPa or less, still more preferably 7000 MPa or less, even still more preferably 6500 MPa or less, even still more preferably 6000 MPa or less, even still more preferably 5700 MPa or less, even still more preferably 5500 MPa or less, even still more preferably 5000 MPa or less, even still more preferably 4500 MPa or less, even still more preferably 4000 MPa or less, preferably 3800 MPa or less, more preferably 3500 MPa or less, and even still more preferably 3300 MPa or less.

From the viewpoint of further improving the winding properties of the thiourethane film, the storage elastic modulus E' of the thiourethane film at 40°C is preferably 1500 MPa or more and 8000 MPa or less, more preferably 1500 MPa or more and 7500 MPa or less, even more preferably 1500 MPa or more and 7000 MPa or less, still more preferably 1500 MPa or more and 6500 MPa or less, even still more preferably 2000 MPa or more and 6000 MPa or less, even still more preferably 2000 MPa or more and 5500 MPa or less, even still more preferably 2000 MPa or more and 5000 MPa or less, even still more preferably 2300 MPa or more and 4500 MPa or less, and even still more preferably 2300 MPa or more and 4000 MPa or less.

The storage elastic modulus of the thiourethane film at 40°C can be measured as follows.

A test piece having a width of 5 mm and a length of 30 mm is cut out from the thiourethane film, and the solid viscoelasticity temperature dispersion is measured under the following conditions to measure the storage elastic modulus E' (MPa) at 40°C.

Device: dynamic viscoelasticity measuring device
Deformation mode: tensile
Temperature rise rate: 2 °C/min
Frequency: 1 Hz
Setting strain: 0.1%
Environment: under air atmosphere

The thiourethane film of the present embodiment preferably has a restoring force of 40.0 N/m or less, which is measured under the following <Conditions>.

<Conditions>

The thiourethane film is cut into a strip shape having a width of 1 cm and a length of 12 cm, one end (a) of the thiourethane film is fixed to a resin cylinder having an outer diameter of 10 cm with an adhesive tape, and the thiourethane film is wound around the resin cylinder. Here, the resin cylinder is fixed in place and is not rotated. Next, a plate having a width of 1 cm and a length of 15 cm is installed horizontally such that it contacts one end (b) of the thiourethane film opposite to the one end (a) as a contact. Next, one end (c) of the plate is overlapped by 1 cm in the length direction with the end portion of the thiourethane film on the one end (b) side, and one end (d) of the plate on a side opposite to the one end (c) is installed in contact with the upper side of the measurement axis of the digital force gauge. The plate is fixed with clay at a portion of 7.5 cm from one end (d), and is installed to be movable with the point fixed with the clay as a fulcrum. Next, the height of the resin cylinder is raised so that the thiourethane film rises along the lower side of the plate, the plate and the tangent of the outer circumference of the resin cylinder overlap each other, and the value G (g) of the digital force gauge when a portion of 1 cm where the plate and the thiourethane film overlap each other is completely adhered is read, and the restoring force (N/m) of the thiourethane film is calculated according to the following Equation (1).

$$\text{Restoring force (N/m)} = (G\ (g) \times 9.80665/1000) \times 100 \qquad \text{Equation (1):}$$

9.80665 in Equation (1) represents gravitational acceleration ($m/s^2$).

In addition, the above-described "portion of 1 cm where the plate and the thiourethane film overlap each other is completely adhered" means that the thiourethane film is pushed up from below the plate, and a portion having a length of 1 cm and a width of 1 cm from one end (c) of the plate and a portion having a length of 1 cm and a width of 1 cm from one end (b) of the thiourethane film are in close contact with each other without a gap in the entire surface.

From the viewpoint of further improving the winding properties of the film, the restoring force of the thiourethane film measured under the above-described conditions is preferably 40.0 N/m or less, more preferably 35.0 N/m or less, still more preferably 30.0 N/m or less, even more preferably 25.0 N/m or less, even still more preferably 20.0 N/m or less, even still more preferably 15.0 N/m or less, even still more preferably 12.0 N/m or less, and even still more preferably 10.0 N/m or less, and from the viewpoint of further improving the performance balance of the winding properties and the blocking property of the film and the releasability of the protective film described later, the restoring force is preferably 0 N/m or more, more preferably 0.3 N/m or more, still more preferably 0.5 N/m or more, even still more preferably 0.8 N/m or more, even still more preferably 1.0 N/m or more, even still more preferably 1.5 N/m or more, even still more preferably 3.0 N/m or more, even still more preferably 5.0 N/m or more, and even still more preferably 7.0 N/m or more.

In order to make E' × T and the restoring force of the thiourethane film fall within the above-described ranges, the type and composition of monomers used in the photopolymerizable composition, a step of polymerizing a part of the photopolymerizable composition by irradiating the photopolymerizable composition with ultraviolet rays and then further polymerizing the photopolymerizable composition by heating the photopolymerizable composition to cure the photopolymerizable composition, and adjusting the thickness and the like of the thiourethane film to an appropriate range are important.

From the viewpoint of further improving the winding property of the film, the restoring force of the thiourethane film per the width of 1 m and the thickness of 300 μm is preferably 20.0 N/m or less, more preferably 15.0 N/m or less, still more preferably 12.0 N/m or less, and even still more preferably 10.0 N/m or less. From the viewpoint of further improving the performance balance of the winding property and the blocking property of the film and the releasability of the protective film described later, the restoring force of the thiourethane film per width of 1 m and the thickness of 300 μm is preferably 0 N/m or more, more preferably 0.5 N/m or more, still more preferably 0.8 N/m or more, even still more preferably 1.0 N/m or more, even still more preferably 1.5 N/m or more, even still more preferably 2.0 N/m or more, even still more preferably 3.0 N/m or more, and even still more preferably 6.0 N/m or more.

The restoring force of the thiourethane film per width of 1 m and thickness of 300 μm can be calculated by Equation (2) using a value G (g) of a digital force gauge measured by the same method as the restoring force per width of 1 m described above and the thickness (μm) of the thiourethane film described later.

Restoring force (N/m) = (G (g) × 9.80665 (m/s$^2$)/1000 × 100)/thickness (μm) of thiourethane film × 300 (μm)   Equation (2):

The thickness T of the thiourethane film is preferably 50 μm or more, more preferably 70 μm or more, still more preferably 100 μm or more, even still more preferably 130 μm or more, even still more preferably 150 μm or more, even still more preferably 200 μm or more, even still more preferably 250 μm or more, and even still more preferably 300 μm or more, and is preferably 3000 μm or less, more preferably 2000 μm or less, still more preferably 1000 μm or less, even still more preferably 800 μm or less, even still more preferably 650 μm or less, even still more preferably 600 μm or less, even still more preferably 500 μm or less, even still more preferably 450 μm or less, and even still more preferably 400 μm or less.

In addition, the thickness T of the thiourethane film is preferably 50 μm or more and 3000 μm or less, more preferably 70 μm or more and 2000 μm or less, still more preferably 100 μm or more and 1000 μm or less, even still more preferably 130 μm or more and 800 μm or less, even still more preferably 150 μm or more and 650 μm or less, even still more preferably 200 μm or more and 600 μm or less, even still more preferably 250 μm or more and 500 μm or less, even still more preferably 300 μm or more and 450 μm or less, and even still more preferably 300 μm or more and 400 μm or less.

When the thickness T of the thiourethane film is set to be within the above-described range, the winding property of the thiourethane film is further improved. In addition, by setting the thickness T of the thiourethane film to be equal to or greater than the above-described lower limit value, E' × T and the restoring force are further improved, and by setting the thickness T of the thiourethane film to be equal to or less than the above-described upper limit value, E' × T and the restoring force can be further reduced.

The thickness T of the thiourethane film can be measured using a digimatic indicator.

[Bifunctional or Higher Polythiol (A)]

The photopolymerizable composition in the thiourethane film of the present embodiment contains a bifunctional or higher polythiol (A).

In this manner, a thiourethane bond can be formed between the bifunctional or higher polythiol (A) and the isocyanate compound (B) described later. The polythiol has high nucleophilicity and high reactivity with an isocyanate compound.

The bifunctional or higher polythiol (A) preferably includes one or more selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio) ethane, 3-mercaptomethyl-1,5-dimercapto-2,4-dithiapentane, and tris(mercaptomethylthio)methane, more preferably includes one or more selected from the group consisting of bis(2-mercaptoethyl)sulfide, 4-mercaptomethyl-1,8-dimercapto-3,6-dithiaoctane, and pentaerythritol tetrakis(3-mercaptopropionate), and still more preferably includes one or two selected from the group consisting of bis(2-mercaptoethyl)sulfide and 4-mercaptomethyl-1,8-dimercapto-3,6-dithiaoctane.

The bifunctional or higher polythiol (A) preferably includes both a bifunctional polythiol and a trifunctional or higher polythiol.

As a result, the flexibility of the obtained film is in a more appropriate range, and the film can be suitably used for vacuum forming or pressure forming.

The thiol equivalent of the bifunctional polythiol can be appropriately selected depending on the type of the isocyanate compound (B), and from the viewpoint of appropriately improving the flexibility of the obtained film, the thiol equivalent is preferably 0% or more, more preferably 1% or more, still more preferably 5% or more, even still more preferably 10% or more, even still more preferably 15% or more, even still more preferably 18% or more, even still more preferably 20% or more, even still more preferably 30% or more, and even still more preferably 40% or more with respect to 100% of the total thiol equivalent of the bifunctional polythiol and the trifunctional or higher polythiol, and from the viewpoint of appropriately hardening the obtained film, the thiol equivalent is preferably 80% or less, more preferably 70% or less, and even still more preferably 60% or less.

(Bifunctional Polythiol)

Examples of the bifunctional polythiol include aliphatic polythiol compounds such as methanedithiol, ethanedithiol, 1,3-propanedithiol, 1,2-cyclohexanedithiol, bis(2-mercaptoethyl) ether, diethylene glycol bis(2-mercaptoacetate), diethylene glycol bis(3-mercaptopropionate), ethylene glycol bis(2-mercaptoacetate), ethylene glycol bis(3-mercaptopropionate), bis(mercaptomethyl) sulfide, bis(mercaptomethyl) disulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 2,5-dimercaptomethyl-1,4-dithiane, 2,5-dimercapto-1,4-dithiane, 2,5-dimercaptomethyl-2,5-dimethyl-1,4-dithiane, and thioglycolic acid and mercaptopropionic acid esters thereof;

aromatic polythiol compounds such as bis(2-mercaptoethyl) sulfide, hydroxymethylsulfidebis(2-mercaptoacetate), hydroxymethylsulfidebis(3-mercaptopropionate), hydroxyethylsulfidebis(2-mercaptoacetate), hydroxyethylsulfidebis(3-mercaptopropionate), hydroxymethyldisulfidebis(2-mercaptoacetate), hydroxymethyldisulfidebis(3-mercaptopropionate), hydroxyethyldisulfidebis(2-mercaptoacetate), hydroxyethyldisulfidebis(3-mercaptopropinate), 2-mercaptoethyl ether bis(2-mercaptoacetate), 2-mercaptoethyl ether bis(3-mercaptopropionate), bis(2-mercaptoethyl ester) thiodiglycolate, bis(2-mercaptoethyl ester) thiodipropionate, bis(2-mercaptoethyl ester) dithiodiglycolate, bis(2-mercaptoethyl ester) dithiodipropionate, and 4,6-bis(mercaptomethylthio)-1,3-dithiane;

aromatic polythiol compounds such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 2,5-toluenedithiol, 3,4-toluenedithiol, 1,5-naphthalenedithiol, and 2,6-naphthalenedithiol;

heterocyclic polythiol compounds such as 2-methylamino-4,6-dithiol-sym-triazine, 3,4-thiophenedithiol, bismuthiol, 4,6-bis(mercaptomethylthio)-1,3-dithiane, 2-(2,2-bis(mercaptomethylthio) ethyl)-1,3-dithiethane; and the like.

Among these, as the bifunctional polythiol, it is more preferable to include one or two or more selected from the group consisting of 2,5-bis(mercaptomethyl)-1,4-dithiane, bis(2-mercaptoethyl)sulfide, and 4,6-bis(mercaptomethylthio)-1,3-dithiane.

(Trifunctional or Higher Polythiol)

Examples of the trifunctional or higher polythiol include 1,2,3-propanetrithiol, tetrakis(mercaptomethyl) methane, trimethylolpropanetris(2-mercaptoacetate), trimethylolpropanetris(3-mercaptopropionate), trimethylolethanetris(2-mercaptoacetate), trimethylolethanetris(3-mercaptopropionate), pentaerythritol tetrakis(2-mercaptoacetate), pentaerythritol tetrakis(3-mercaptopropionate), 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, and thioglycolic acid esters and mercaptopropionic acid esters thereof;

aliphatic polythiol compounds such as 1,1,3,3-tetrakis(mercaptomethylthio) propane, 1,1,2,2-tetrakis(mercaptomethylthio) ethane, tris(mercaptomethylthio) methane, and tris(mercaptoethylthio) methane;
aromatic polythiol compounds such as 1,3,5-trimercaptobenzene, 1,3,5-tris(mercaptomethyl) benzene, 1,3,5-tris(mercaptomethyleneoxy) benzene, and 1,3,5-tris(mercaptoethyleneoxy) benzene;
a heterocyclic polythiol compound such as 2,4,6-trimercapto-s-triazine, 2,4,6-trimercapto-1,3,5-triazine, or 2-(2,2-bis(methylthiomethyl)ethyl)-1,3-dithiethane; and the like.

The trifunctional or higher polythiol preferably includes one or more selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(2-mercaptoacetate), pentaerythritol tetrakis(3-mercaptopropionate), 1,1,3,3-tetrakis(mercaptomethylthio)propane, 2-(2,2-bis(mercaptomethylthio)ethyl)-1,3-dithiethane, 1,1,2,2-tetrakis(mercaptomethylthio) ethane, 3-mercaptomethyl-1,5-dimercapto-2,4-dithiapentane, and tris(mercaptomethylthio)methane, more preferably includes one or more selected from the group consisting of 4-mercaptomethyl-1,8-dimercapto-3,6-dithiaoctane and pentaerythritol tetrakis(3-mercaptopropionate), and still more preferably includes 4-mercaptomethyl-1,8-dimercapto-3,6-dithiaoctane.
The bifunctional or higher polythiol (A) of the present embodiment preferably includes one or two or more bifunctional polythiols selected from the group consisting of 2,5-bis(mercaptomethyl)-1,4-dithiane, bis(2-mercaptoethyl) sulfide, and 4,6-bis(mercaptomethylthio)-1,3-dithiane, and 4-mercaptomethyl-1,8-dimercapto-3,6-dithiaoctane which is a trifunctional or higher polythiol, and more preferably includes bis(2-mercaptoethyl)sulfide and 4-mercaptomethyl-1,8-dimercapto-3,6-dithiaoctane.

[Isocyanate Compound (B)]

The photopolymerizable composition in the thiourethane film of the present embodiment contains an isocyanate compound (B).
The isocyanate compound (B) preferably includes one or two or more selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate, and more preferably includes one or two or more selected from the group consisting of 2,5-bis(isocyanatomethyl)bicyclo-[2.2.1]-heptane, 2,6-bis(isocyanatomethyl)bicyclo-[2.2.1]-heptane, and xylylene diisocyanate.
The equivalent ratio of the thiol group in the bifunctional or higher polythiol (A) to the isocyanato group in the isocyanate compound (B) (thiol group/isocyanato group) is preferably 0.8 or more, more preferably 0.85 or more, and still more preferably 0.9 or more, and is preferably 1.2 or less, more preferably 1.15 or less, and still more preferably 1.1 or less.
In this manner, thiourethane suitably used as a lens material can be obtained.
When the entire photopolymerizable composition is set to 100% by mass, the total of the content of the bifunctional or higher polythiol (A) and the content of the isocyanate compound (B) is preferably 50% by mass or more, more preferably 70% by mass or more, still more preferably 80% by mass or more, even still more preferably 90% by mass or more, even still more preferably 95% by mass or more, even still more preferably 97% by mass or more, even still more preferably 99% by mass or more, and is preferably less than 100% by mass.

[Photopolymerization Initiator (C)]

The photopolymerizable composition in the thiourethane film of the present embodiment contains a photopolymerization initiator (C). The photopolymerization initiator (C) is an initiator that can perform photopolymerization, and preferably includes one or two or more selected from the group consisting of a radical polymerization initiator and a base generator, and from the viewpoint of further improving the photopolymerization properties, more preferably includes a base generator.

(Base Generator)

Preferred examples of the base generator include a compound consisting of an organic boron anion and a counter cation.

The organic boron anion more preferably includes one or two or more selected from the group consisting of a phenyl group, an alkyl group, and an aryl group, and still more preferably includes one or two or more selected from the group consisting of a phenyl group and an alkyl group.

The counter cation more preferably includes one or two or more selected from the group consisting of ammonium and an ammonium salt, and still more preferably includes an ammonium salt.

The base generator more preferably includes one or two or more selected from the group consisting of a compound represented by Formula (1) and a compound represented by Formula (2).

[chem. 3]

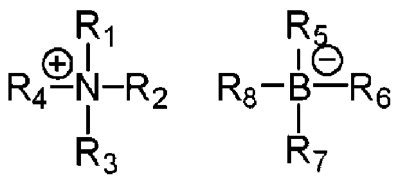

(1)

In Formula (1), $R_1$ to $R_4$ each independently preferably represent an alkyl group having 1 to 8 carbon atoms, $R_5$ to $R_8$ each independently preferably represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.

In Formula (1), $R_1$ to $R_4$ are preferably the same.

$R_1$ to $R_4$ are more preferably an alkyl group having 2 to 5 carbon atoms, still more preferably a linear alkyl group, and even still more preferably an n-butyl group.

In Formula (1), $R_8$ is more preferably an alkyl group having 2 to 5 carbon atoms, still more preferably a linear alkyl group, and even still more preferably an n-butyl group.

In Formula (1), $R_5$ to $R_7$ are preferably the same.

$R_5$ to $R_7$ are more preferably a phenyl group, a butylphenyl group, or a naphthyl group, and still more preferably a phenyl group, a 4-tert-butylphenyl group, a 1-naphthyl group, or a 4-methyl-1-naphthyl group.

When $R_5$ to $R_7$ include an aromatic ring, the aromatic ring may be substituted with an alkyl group, an aryl group, or the like.

The compound represented by Formula (1) is preferably at least one selected from the group consisting of tetra(n-butyl)ammonium=n-butyltriphenylborate, tetra(n-butyl)ammonium=n-butyltri(4-tert-butylphenyl)borate, tetra(n-butyl)ammonium=n-butyltri(1-naphthyl)borate, and tetra(n-butyl)ammonium=n-butyltri(4-methyl-1-naphthyl)borate. In addition, "=" in the compound name means an ionic bond.

Among these, from the viewpoint of further improving the performance balance of solubility, polymerization properties, and pot life, the compound represented by Formula (1) is more preferably at least one selected from the group consisting of tetra(n-butyl)ammonium=n-butyltriphenylborate and tetra(n-butyl)ammonium=n-butyltr(1-naphthyl)borate.

[chem. 4]

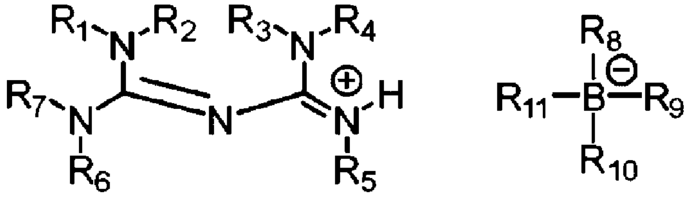

(2)

In Formula (2), $R_1$ to $R_7$ each independently represent an alkyl group having 1 to 8 carbon atoms or a cycloalkyl group having 3 to 8 carbon atoms, $R_8$ to $R_{11}$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.

In Formula (2), $R_1$ to $R_7$ are preferably the same.

$R_1$ to $R_7$ are each preferably an alkyl group having 2 to 5 carbon atoms, more preferably a linear alkyl group, and still more preferably an n-butyl group.

In Formula (2), $R_{11}$ is more preferably an alkyl group having 2 to 5 carbon atoms, still more preferably a linear alkyl group, and even still more preferably an n-butyl group.

In Formula (2), $R_8$ to $R_{10}$ are preferably the same.

$R_8$ to $R_{10}$ are more preferably a phenyl group, a butylphenyl group, or a naphthyl group, and still more preferably a phenyl group, a 4-tert-butylphenyl group, a 1-naphthyl group, or a 4-methyl-1-naphthyl group.

When $R_8$ to $R_{10}$ include an aromatic ring, the aromatic ring may be substituted with an alkyl group, an aryl group, or the like.

As the compound consisting of the above-described organic boron anion and counter cation, a commercially available product can also be used. Examples of the commercially available product include Karenz (registered trademark) N3B and Karenz (registered trademark) P3B (all of which are manufactured by RESONAC Corporation), and WPBG-300 and WPBG-345 (all of which are manufactured by FUJIFILM Corporation).

(Radical Polymerization Initiator)

As the radical polymerization initiator, a known thermal radical polymerization initiator and a known photoradical polymerization initiator can be used.

Examples of thermal radical polymerization initiators include dialkyl peroxides such as dicumyl peroxide, t-butyl cumyl peroxide, 2,5-bis(t-butylperoxy) 2,5-dimethylhexane, 2,5-bis(t-butylperoxy) 2,5-dimethyl hexyne-3, di-t-butyl peroxide, isopropyl cumyl-t-butyl peroxide, and bis($\alpha$-t-butylperoxy isopropyl)benzene; peroxy ketals such as 1,1-bis(t-butylperoxy) cyclohexane, 1,1-bis(t-butylperoxy) 3,3,5-trimethylcyclohexane, 1,1-bis(t-butylperoxy) cyclododecane, n-butyl-4,4-bis(t-butylperoxy) valerate, ethyl 3,3-bis(t-butylperoxy) butyrate, 3,3,6,6,9,9-hexamethyl-1,2,4,5-tetraoxycyclononane; peroxy esters such as bis(t-butylperoxy) isophthalate, t-butylperoxybenzoate, and t-butylperoxyacetate; hydroperoxides such as t-butyl hydroperoxide, t-hexyl hydroperoxide, cumin hydroperoxide, 1,1,3,3-tetramethylbutyl hydroperoxide, diisopropylbenzene hydroperoxide, and p-menthane hydroperoxide; bibenzyl compounds such as 2,3-dimethyl-2,3-diphenylbutane; and 3,3,5,7,7-pentamethyl-1,2,4-trioxepane.

Examples of the photoradical polymerization initiator include benzoin alkyl ether, benzyl dimethyl ketal, 1-hydroxycyclohexyl phenyl ketone, 2-hydroxy-2-methyl-1-phenylpropan-1-one, benzophenone, methyl benzoyl formate, isopropyl thioxantone, and a mixture of two or more thereof. In addition, a sensitizer can also be used together with the photoradical polymerization initiator. Examples of the sensitizer include carbonyl compounds such as anthraquinone, 1,2-naphthoquinone, 1,4-naphthoquinone, benzanthrone, p,p'-tetramethylbenzophenone, and chloranil; nitro compounds such as nitrobenzene, p-dinitrobenzene, and 2-nitrofluorene; aromatic hydrocarbons such as anthracene and chrysene; sulfur compounds such as diphenyldisulfide; and nitrogen compounds such as nitroaniline, 2-chloro-4-nitroaniline, 5-nitro-2-aminotoluene, and tetracyanoethylene.

From the viewpoint of further improving the photopolymerization properties and further enabling the formation of a thiourethane film, the content of the photopolymerization initiator (C) is preferably 250 ppm by mass or more, more preferably 300 ppm by mass or more, still more preferably 500 ppm by mass or more, and even still more preferably 700 ppm by mass or more, and is preferably 20000 ppm by mass or less, more preferably 15000 ppm by mass or less, even

more preferably 12000 ppm by mass or less, even still more preferably 10000 ppm by mass or less, even still more preferably 8000 ppm by mass or less, and even still more preferably 6000 ppm by mass or less, with respect to the total amount of the bifunctional or higher polythiol (A) and the isocyanate compound (B) .

In addition, from the viewpoint of further reducing the Young's modulus of the obtained thiourethane film and further improving the winding property, the content of the photopolymerization initiator (C) is more preferably 1000 ppm by mass or more, still more preferably 1200 ppm by mass or more, even still more preferably 1300 ppm by mass or more, even further still more preferably 1400 ppm by mass or more, even further still more preferably 1500 ppm by mass or more, and even further still more preferably 2000 ppm by mass or more with respect to the total amount of the bifunctional or higher polythiol (A) and the isocyanate compound (B), and from the viewpoint of further suppressing the coloration of the film, the content of the photopolymerization initiator (C) is more preferably 5000 ppm by mass or less, still more preferably 4500 ppm by mass or less, and even still more preferably 4000 ppm by mass or less with respect to the total amount of the bifunctional or higher polythiol (A) and the isocyanate compound (B). From the viewpoint of appropriately increasing the Young's modulus of the film and further improving the winding property, the content of the photopolymerization initiator (C) is even further still more preferably 2500 ppm by mass or less with respect to the total amount of the bifunctional or higher polythiol (A) and the isocyanate compound (B), and from the viewpoint of further reducing the yellowness (YI value) of the film and further improving the appearance of the film, the content of the photopolymerization initiator (C) is even further still more preferably 2300 ppm by mass or less and even further still more preferably 2100 ppm by mass or less with respect to the total amount of the bifunctional or higher polythiol (A) and the isocyanate compound (B).

In addition, from the viewpoint of further improving the photopolymerization properties and further enabling the formation of a thiourethane film, the content of the photopolymerization initiator (C) is preferably 250 ppm by mass or more and 20000 ppm by mass or less, more preferably 300 ppm by mass or more and 15000 ppm by mass or less, still more preferably 500 ppm by mass or more and 10000 ppm by mass or less, even still more preferably 700 ppm by mass or more and 8000 ppm by mass or less, and even still more preferably 700 ppm by mass or more and 6000 ppm by mass or less with respect to the total amount of the bifunctional or higher polythiol (A) and the isocyanate compound (B).

In addition, the content of the photopolymerization initiator (C) is more preferably 1000 ppm by mass or more and 5000 ppm by mass or less, still more preferably 1200 ppm by mass or more and 4500 ppm by mass or less, even still more preferably 1300 ppm by mass or more and 4500 ppm by mass or less, even still more preferably 1400 ppm by mass or more and 4000 ppm by mass or less, even still more preferably 1500 ppm by mass or more and 2500 ppm by mass or less, and even still more preferably 2000 ppm by mass or more and 2300 ppm by mass or less, with respect to the total amount of the bifunctional or higher polythiol (A) and the isocyanate compound (B).

When the content of the photopolymerization initiator (C) is 1000 ppm by mass or more, the Young's modulus of the obtained thiourethane film can be further reduced, and the winding properties can be further improved. In addition, when the content of the photopolymerization initiator (C) is 5000 ppm by mass or less, the coloration of the film can be further suppressed, when the content of the photopolymerization initiator (C) is 2500 ppm by mass or less, the Young's modulus of the film can be moderately increased, and the winding property can be further improved, and when the content of the photopolymerization initiator (C) is 2300 ppm by mass or less, the yellowness (YI value) of the film can be further decreased, and the appearance of the film can be further improved.

The unit (ppm by mass) of the content of the photopolymerization initiator (C) represents the content (mg) of the photopolymerization initiator (C) per total 1 kg of the bifunctional or higher polythiol (A) and the isocyanate compound (B), that is, mg/kg.

The thiourethane film of the present embodiment preferably contains a boron element.

For example, when the thiourethane film contains the photopolymerization initiator (C) described above, the thiourethane film contains a boron element derived from the photopolymerization initiator (C).

The fact that the thiourethane film contains a boron element can be analyzed by combining element analysis such as fluorescence X-ray analysis or ICP emission analysis, X-ray photoelectron spectroscopy (XPS/ESCA), and time-of-flight secondary ion mass spectrometry (TOF-SIMS). For example, the boron element content can be measured by a standard addition method using inductively coupled plasma mass spectrometry (ICP-MS) after acid decomposition of the thiourethane film with a microwave acid decomposition device. The boron element content in the thiourethane film is preferably 10 ppm or more and 300 ppm or less. The unit "ppm" of the boron element content represents the content (mg) of the boron element per 1 kg of the thiourethane film, that is, mg/kg.

From the viewpoint of further promoting the polymerization of the photopolymerizable composition, making it possible to form the thiourethane film, and further improving the appearance, the boron element content in the thiourethane film is preferably 5 ppm or more, more preferably 10 ppm or more, still more preferably 15 ppm or more, and even more preferably 20 ppm or more, and is preferably 200 ppm or less, more preferably 180 ppm or less, still more preferably 160 ppm or less, even more preferably 130 ppm or less, even still more preferably 100 ppm or less, even still more preferably 80 ppm or less, and even still more preferably 50 ppm or less.

In addition, from the viewpoint of further promoting the polymerization of the photopolymerizable composition, making it possible to further form the thiourethane film, and further improving the appearance, the boron element content in

the thiourethane film is preferably 5 ppm or more and 200 ppm or less, more preferably 5 ppm or more and 180 ppm or less, still more preferably 10 ppm or more and 160 ppm or less, even still more preferably 10 ppm or more and 130 ppm or less, even further still more preferably 15 ppm or more and 100 ppm or less, even further still more preferably 15 ppm or more and 80 ppm or less, and even further still even more preferably 20 ppm or more and 50 ppm or less.

The boron element content in the thiourethane film can be measured, for example, by subjecting the thiourethane film to acid decomposition by a wet decomposition method and then performing inductively coupled plasma mass spectrometry (ICP-MS). A specific measurement method will be described in the section of Examples.

[Metal Catalyst (D)]

The photopolymerizable composition in the thiourethane film of the present embodiment preferably further contains a metal catalyst (D).

Examples of the metal catalyst (D) include an organic tin compound, an organic lead compound, an organic nickel compound, an organic copper compound, an organic bismuth compound, and a potassium salt. Among these, the metal catalyst (D) preferably includes an organic tin compound.

Examples of the organic tin compound include tin acetate, tin octoate, tin oleate, tin laurate, monobutyltin trioctate, dibutyltin diacetate, dimethyltin dilaurate, dibutyltin dilaurate, dibutyltin dimercaptide, dibutyltin maleate, dibutyltin dineodecanoate, dioctyltin dimercaptide, dioctyltin dilaurylate, dimethyltin dichloride, and dibutyltin dichloride, and the organic tin compound preferably includes one or two selected from the group consisting of dimethyltin dichloride and dibutyltin dichloride.

From the viewpoint of further improving the polymerization properties, the content of the metal catalyst (D) is preferably 0.1 ppm or more, more preferably 0.5 ppm or more, still more preferably 1 ppm or more, and even still more preferably 5 ppm or more, and is preferably 45 ppm or less, more preferably 40 ppm or less, and even still more preferably 35 ppm or less, with respect to the total of the bifunctional or higher polythiol (A) and the isocyanate compound (B).

The unit (ppm) of the content of the metal catalyst (D) represents the content (mg) of the metal catalyst (D) per total 1 kg of the bifunctional or higher polythiol (A) and the isocyanate compound (B), that is, mg/kg.

[Other Components]

The photopolymerizable composition of the present embodiment may further contain an ultraviolet absorber, an antioxidant, a light stabilizer, a sensitizer, a release agent, a solvent, a blueing agent, an IR cut agent, a blue light cut agent, a reactive diluent, an oil-soluble dye, a pigment, a dye, a fragrance, a filler, an adhesiveness improver such as a coupling agent, a chain extender, a crosslinking agent, an antifoaming agent, a precipitate inhibitor, a dispersing agent, a plasticizer, a sagging inhibitor, an antifouling agent, a preservative, a fungicide, a bactericide, an anti-mold agent, a matting agent, a thickener, a pigment dispersing agent, a cissing inhibitor, a scratch resistance improver, a slip agent, a surface modifier, a color separation inhibitor, an emulsifier, a skinning inhibitor, a drying agent, an antistatic agent, a conductive agent (an electrostatic auxiliary agent), a flame retardant, a thermal conductivity improver, a plasticizer, an ion exchange resin, and the like.

Examples of the release agent include an acidic phosphoric acid ester compound, a polyether-modified silicone, an alkyl-modified silicone, a polyester-modified silicone, a dimethyl polysiloxane, a polyoxyalkylene glycol monoalkyl ether compound, a polyoxyalkylene glycol monoester compound, a fluorine atom-containing compound, a surfactant, a nonionic surfactant, and an acrylic surfactant.

The content of the release agent is preferably 20 ppm or more, more preferably 50 ppm or more, still more preferably 100 ppm or more, even still more preferably 200 ppm or more, even still more preferably 500 ppm or more, and even still more preferably 1000 ppm or more, and is preferably 5000 ppm or less, more preferably 4500 ppm or less, still more preferably 4000 ppm or less, even still more preferably 3500 ppm or less, even still more preferably 3000 ppm or less, even still more preferably 2000 ppm or less, even still more preferably 1800 ppm or less, even still more preferably 1500 ppm or less, and even still more preferably 1300 ppm or less, with respect to the total of the bifunctional or higher polythiol (A) and the isocyanate compound (B) .

The thiourethane film of the present embodiment is preferably obtained by irradiating a photopolymerizable composition with ultraviolet rays to polymerize a part of the photopolymerizable composition, and then heating the photopolymerizable composition to further polymerize the photopolymerizable composition.

As a result, it is easy to set E' $\times$ T and the restoring force of the film of the present embodiment to the above-described ranges, and thus the winding property in a case of winding the thiourethane film around the core is further improved.

In addition, this makes it possible to set the thickness of the thiourethane film to an appropriate range.

In addition, by further heating after the ultraviolet irradiation, a portion that is not polymerized by the ultraviolet irradiation can be polymerized, and a completely polymerized polymerized substance can be obtained. In addition, in this

manner, the unreacted isocyanate group or the like in the isocyanate compound (B) reacts, and the increase in the hygroscopicity of the polymerized substance of the photopolymerizable composition is suppressed, and when the thiourethane film is attached to the lens substrate, it is possible to suppress the occurrence of air bubbles or water bubbles, which causes poor appearance.

Ultraviolet rays include UVC having a wavelength of 250 to 260 nm and UVA having a wavelength of 320 to 390 nm, and UVC affects photopolymerization properties.

When ultraviolet rays are used, a light source such as sunlight, a chemical lamp, a mercury lamp, a metal halide lamp, or a UV LED can be used.

From the viewpoint of making the appearance of the obtained film better and further improving the winding properties, the integrated light amount of ultraviolet irradiation is preferably 500 mJ or more, more preferably 1000 mJ or more, still more preferably 1200 mJ or more, and even still more preferably 1500 mJ or more, and is preferably 10000 mJ or less, more preferably 9500 mJ or less, still more preferably 9000 mJ or less, even still more preferably 6000 mJ or less, even further still more preferably 5000 mJ or less, even further still more preferably 4000 mJ or less, even further still even more preferably 3800 mJ or less, even further still even more preferably 3500 mJ or less, and even further still even more preferably 3000 mJ or less.

The integrated light amount of ultraviolet irradiation represents a total integrated light amount of UVC and UVA.

From the viewpoint of making the appearance of the film to be obtained more favorable and further improving the winding properties, the irradiation intensity of the ultraviolet irradiation is preferably 100 mW or more, more preferably 150 mW or more, and still more preferably 200 mW or more, and is preferably 2000 mW or less, more preferably 1800 mW or less, still more preferably 1600 mW or less, even still more preferably 1000 mW or less, even still more preferably 800 mW or less, even further still more preferably 600 mW or less, and even further still more preferably 400 mW or less.

The irradiation intensity of the ultraviolet irradiation represents the total irradiation intensity of UVC and UVA.

From the viewpoint of making the appearance of the obtained film better and further improving the winding properties, the integrated light amount of UVC in the ultraviolet irradiation is preferably 100 mJ or more, more preferably 200 mJ or more, and still more preferably 250 mJ or more, and is preferably 4000 mJ or less, more preferably 3000 mJ or less, still more preferably 2500 mJ or less, even still more preferably 1200 mJ or less, even still more preferably 1000 mJ or less, even still more preferably 800 mJ or less, even still more preferably 600 mJ or less, even still more preferably 500 mJ or less, and even still more preferably 300 mJ or less.

From the viewpoint of making the appearance of the obtained film better, the irradiation intensity of UVC in the ultraviolet irradiation is preferably 10 mW or more, more preferably 20 mW or more, still more preferably 30 mW or more, even more preferably 40 mW or more, even still more preferably 50 mW or more, and even still more preferably 60 mW or more, and is preferably 200 mW or less, more preferably 150 mW or less, and still more preferably 100 mW or less.

The integrated light amount of UVA during ultraviolet irradiation is preferably 500 mJ or more, more preferably 1000 mJ or more, and still more preferably 1300 mJ or more, and is preferably 8000 mJ or less, more preferably 7000 mJ or less, still more preferably 4000 mJ or less, even still more preferably 3500 mJ or less, and even still more preferably 2000 mJ or less.

The irradiation intensity of UVA in the ultraviolet irradiation is preferably 50 mW or more, more preferably 100 mW or more, and still more preferably 150 mW or more, and is preferably 3000 mW or less, more preferably 2500 mW or less, still more preferably 800 mW or less, even still more preferably 500 mW or less, and even still more preferably 300 mW or less.

The ultraviolet irradiation to the photopolymerizable composition can be performed after forming a film having a certain thickness with the photopolymerizable composition.

The thickness of the film formed of the photopolymerizable composition is preferably 50 μm or more, more preferably 100 μm or more, still more preferably 150 μm or more, even still more preferably 200 μm or more, and even still more preferably 250 μm or more, and is preferably 3000 μm or less, more preferably 1000 μm or less, still more preferably 600 μm or less, and even still more preferably 400 μm or less.

By setting the thickness of the film of the photopolymerizable composition to be in the above-described range, the thickness T of the obtained thiourethane film can be set to be in a range described later.

The formation of the film by the photopolymerizable composition is not limited, but for example, two glass plates can be disposed with a gap such that the above-described range is obtained, a PTFE sheet can be installed to surround four sides of the glass plates, the photopolymerizable composition can be injected, and the two glass plates can be fixed by being clamped with a clip.

In addition, the film formed of the photopolymerizable composition can also be applied onto a substrate by a known method in the related art such as a bar coater, a spin coater, or a dip coater.

A release film can be used as the substrate, and the release film includes at least one selected from the group consisting of polyethylene terephthalate and a fluororesin.

In addition, when a film formed of a photopolymerizable composition is formed by applying the film onto a substrate, preferably, a protective film is further provided on a surface of the film opposite to the substrate when the film is

heated after ultraviolet irradiation.

By providing the protective film, it is possible to prevent oxygen and moisture from coming into contact with the photopolymerizable composition during the polymerization of the photopolymerizable composition, and it is possible to prevent air bubbles from being generated in the obtained thiourethane film.

The protective film is not limited as long as it can prevent the infiltration of oxygen and moisture and is heat resistant, and it is preferably a release film from the viewpoint of easy peeling after heating is completed. As the release film, for example, a polyethylene terephthalate film can be used. In addition, from the viewpoint of easy peeling after heating is completed, a protective film having a thickness of preferably 5 μm or more and 150 μm or less can be used.

From the viewpoint of more sufficiently polymerizing the photopolymerizable composition, the heating temperature in a case of heating the photopolymerizable composition is preferably 80°C or higher, more preferably 100°C or higher, and still more preferably 110°C or higher, and from the viewpoint of further improving the winding properties of the obtained thiourethane film, the heating temperature is preferably 140°C or lower and more preferably 130°C or lower.

The heating time in a case of heating the photopolymerizable composition is preferably 10 minutes or longer, more preferably 30 minutes or longer, still more preferably 50 minutes or longer, and even more preferably 60 minutes or longer, and is preferably 300 minutes or shorter, more preferably 150 minutes or shorter, still more preferably 120 minutes or shorter, even more preferably 100 minutes or shorter, and even still more preferably 80 minutes or shorter.

From the viewpoint of further improving the heat resistance, the glass transition temperature Tg of the thiourethane film is preferably 60°C or higher and more preferably 70°C or higher, and from the viewpoint of further improving the flexibility, the glass transition temperature Tg of the thiourethane film is preferably 130°C or lower and more preferably 120°C or lower.

The glass transition temperature of the thiourethane film can be measured as follows.

A test piece having a width of 5 mm and a length of 30 mm is cut out from the thiourethane film, and the solid viscoelasticity temperature dispersion is measured under the following conditions to measure the glass transition temperature Tg (°C). Tg is a peak temperature of tanδ.

Device: dynamic viscoelasticity measuring device
Deformation mode: tensile
Temperature rise rate: 3 °C/min
Frequency: 1 Hz
Setting strain: 0.1%
Environment: Under a nitrogen atmosphere

In the thiourethane film of the present embodiment, the degree of polymerization is preferably 50% or more, more preferably 60% or more, still more preferably 70% or more, and even still more preferably 80% or more, and is preferably 100% or less and more preferably 90% or less.

When the degree of polymerization is equal to or higher than the above-described lower limit value, the photopolymerizable composition is further polymerized, and the thiourethane film can be formed, and the Young's modulus can be further reduced, and the winding property can be further improved. When the degree of polymerization is equal to or less than the above-described upper limit value, the Young's modulus is appropriately improved, and the winding properties can be further improved.

The degree of polymerization was calculated from the absorbance of the NCO absorption peak measured by FT-IR (ATR method) with an unpolymerized state as a reference. Specifically, the details are shown in the section of Examples.

In the thiourethane film of the present embodiment, from the viewpoint of further suppressing yellowing and further improving the appearance, the yellowness (YI value) measured in accordance with JIS K7373: 2006 under a condition of a thickness of 2 mm is preferably less than 3.0, more preferably 2.5 or less, still more preferably 2.3 or less, even still more preferably 2.0 or less, even still more preferably 1.9 or less, even still more preferably 1.5 or less, and even still more preferably 1.3 or less.

The lower limit of the yellowness (YI value) measured in accordance with JIS K7373: 2006 under the condition of a thickness of 2 mm is not limited, but may be, for example, -1.0 or more, -0.6 or more, 0.0 or more, or 0.3 or more.

In the thiourethane film of the present embodiment, the haze measured in accordance with JIS K7136:2000 under a condition of a thickness of 2 mm is preferably 1.0% or less, more preferably 0.8% or less, and still more preferably 0.6% or less, from the viewpoint of further improving transparency.

The lower limit of the haze measured in accordance with JIS K7136:2000 under the condition of a thickness of 2 mm is not limited, but may be, for example, 0.1% or more, 0.3% or more, or 0.5% or more.

In the thiourethane film of the present embodiment, according to JIS K7171: 2016, for a test piece having a length of 65 mm, a width of 25 mm, and a thickness of 2 mm, a Young's modulus measured using a tensile tester under conditions of a measurement temperature of 23°C, a measurement humidity of 50% RH, a tensile speed of 1 mm/min, and a distance between fulcrums of 34 mm is preferably 100 MPa or more, more preferably 300 MPa or more, still more preferably 500

MPa or more, even still more preferably 700 MPa or more, and even still more preferably 900 MPa or more, and is preferably 5000 MPa or less, more preferably 4000 MPa or less, still more preferably 3500 MPa or less, even still more preferably 3000 MPa or less, even still more preferably 2500 MPa or less, and even still more preferably 2300 MPa or less.

When the Young's modulus is equal to or greater than the above-described lower limit value, the thiourethane film is moderately hard, and the winding properties are further improved. When the Young's modulus is equal to or less than the above-described upper limit value, the thiourethane film becomes softer, and the winding properties are further improved.

The yellowness (YI value), haze, and Young's modulus of the above-described thiourethane film having a thickness of 2 mm can also be measured by overlapping a plurality of thiourethane films and press-molding (temperature: 150°C, pressure: 5 MPa) to form a 2 mm film.

The thiourethane film according to the present embodiment can be used for imparting functionality to a lens substrate or the like. More specifically, optical characteristics can be imparted by blending a functional dye such as a photochromic dye, a polarizing dye, or a specific wavelength cut dye.

In addition, when the thiourethane film not containing a functional component such as a dye is bonded to a lens substrate or the like, the strength of the lens or the like can be further improved.

In addition, as will be described later, when a hard coat layer is formed by applying the hard coat layer to the thiourethane film of the present embodiment, the hard coat layer can be formed directly on the thiourethane film without using an adhesive layer or the like.

The thiourethane film may further include one or two or more selected from the group consisting of a hard coat layer and an anti-reflection layer.

When the thiourethane film includes a primer layer, it is preferable that the hard coat layer and the anti-reflection layer are provided on a side of the thiourethane film opposite to the primer layer.

In addition, when both the hard coat layer and the anti-reflection layer are provided, the anti-reflection layer can be formed on the hard coat layer after the hard coat layer is formed on the lens substrate.

The hard coat layer is a coating layer for imparting functions such as scratch resistance, abrasion resistance, moisture resistance, hot water resistance, heat resistance, and weather resistance to the lens surface, and the film thickness thereof is, for example, 0.3 μm or more and 30 μm or less.

Generally, for the hard coat layer, a hard coat composition is used which includes an organic silicon compound having curability and one or more oxide fine particles of elements selected from the element group of Si, Al, Sn, Sb, Ta, Ce, La, Fe, Zn, W, Zr, In, and Ti and/or one or more fine particles formed of composite oxides of two or more elements selected from this element group.

The hard coat layer is formed, for example, by coating a hard coat composition by a known coating method such as spin coating or dip coating and then curing the composition. Examples of curing methods include heat curing, curing methods using energy ray irradiation such as ultraviolet rays or visible light, and the like. In order to suppress the occurrence of interference fringes, it is preferable that the difference in refractive index of the hard coat layer and the lens be in a range of ±0.1.

The anti-reflection layer is formed on the hard coat layer, for example, as necessary.

The anti-reflection layer may be a single layer or a multilayer. There are inorganic type and organic type anti-reflection layers and, in the case of an inorganic type, inorganic oxides such as $SiO_2$ and $TiO_2$ are used, and the anti-reflection layer is formed by a dry method such as a vacuum deposition method, a sputtering method, an ion plating method, an ion beam assist method, or a CVD method. In the case of an organic type, the anti-reflection layer is formed by a wet method using an organic silicon compound and a composition including silica-based fine particles having an internal cavity.

An anti-fogging coating layer, an antifouling layer, a water-repellent layer, or the like may be formed on the anti-reflection layer as necessary. A method of forming the anti-fogging coating layer, the antifouling layer, the water-repellent layer, and the like is not particularly limited, and a known method in the related art can be applied.

The water contact angle of the surface of the thiourethane film is preferably 50.0° or more, more preferably 55.0° or more, and still more preferably 60.0° or more, and is preferably 90.0° or less, more preferably 85.0° or less, and still more preferably 80.0° or less.

When the water contact angle of the surface of the thiourethane film is within the above-described range, even when the thiourethane film is provided with one or two selected from the group consisting of a hard coat layer and an anti-reflection layer, and the hard coat layer or the anti-reflection layer is directly formed on the thiourethane film without the adhesive layer described later, interlayer adhesiveness between the thiourethane film and one or two selected from the group consisting of a hard coat layer and an anti-reflection layer is further improved.

The water contact angle can be measured at 23°C and 50% RH using a contact angle meter in accordance with JIS R3257: 1999.

The thiourethane film of the present embodiment may further include an adhesive layer on one surface. As a result, interlayer adhesiveness between the thiourethane film and one or two or more selected from the group consisting of a lens substrate, a hard coat layer, and an anti-reflection layer is further improved.

As the adhesive layer, a material having high adhesiveness to one or two or more selected from the group consisting of a lens substrate, a hard coat layer, and an anti-reflection layer is preferable, and examples thereof include an adhesive composition containing, as a main component, one or two or more selected from the group consisting of a urethane-based resin, an epoxy-based resin, a polyester-based resin, a melamine-based resin, and polyvinyl acetal, and it is preferable that the adhesive layer contains a polyurethane-based aqueous dispersion. In addition, the adhesive layer preferably includes one or two or more selected from the group consisting of urethane (meth)acrylate, a (meth)acrylic monomer, a (meth)acrylic resin, a urethane resin, and an ester resin.

The adhesive layer is formed by, for example, a coating method or a dry method. In the coating method, the adhesive layer is formed by applying the adhesive composition by a known coating method such as spin coating or dip coating and then solidifying the adhesive composition. In the dry method, a primer layer is formed by a known dry method such as a CVD method or a vacuum vapor deposition method.

When the thiourethane film includes an adhesive layer and a hard coat layer, it is preferable that the adhesive layer is provided on a surface opposite to the hard coat layer. In addition, it is also preferable that the thiourethane film includes an adhesive layer and a lens substrate in this order on a surface opposite to the hard coat layer.

The thiourethane film of the present embodiment can be directly bonded to the hard coat layer. In addition, by bonding the lens substrate to the thiourethane film through the adhesive layer, the lens substrate can be more firmly bonded to the thiourethane film.

From the viewpoint of further improving the strength, the lens substrate contains at least one selected from the group consisting of polythiourethane, poly(meth)acrylate, polycarbonate, polyallyl carbonate, polyethylene terephthalate, polytriacetyl cellulose, polyvinyl alcohol, polyester, polyamide, polyepoxy, polyepisulfide, and polyurethane, more preferably contains at least one selected from the group consisting of polythiourethane, polyurethane, and polyepisulfide, and still more preferably contains polythiourethane.

When the lens substrate contains polythiourethane, since the same material as the thiourethane film is used, it is easy to polish the lens substrate into a shape of, for example, a spectacle lens after bonding the thiourethane film to the lens substrate.

Examples of the laminated structure when the thiourethane film of the present embodiment has one or two or more selected from the group consisting of a lens substrate, an adhesive layer, a hard coat layer, and an anti-reflection layer include thiourethane film/lens substrate, thiourethane film/adhesive layer, hard coat layer/thiourethane film, anti-reflection layer/hard coat layer/thiourethane film, hard coat layer/thiourethane film/adhesive layer, anti-reflection layer/-hard coat layer/thiourethane film/adhesive layer, thiourethane film/adhesive layer/lens substrate, hard coat layer/thiourethane film/adhesive layer/lens substrate, and anti-reflection layer/hard coat layer/thiourethane film/adhesive layer/lens substrate.

[Use of Thiourethane Film]

The thiourethane film according to the present embodiment can be used for various plastic lenses such as a display member, an augmented reality (AR)/virtual reality (VR) device display member, a plastic eyeglass lens, sunglasses, goggles, an eyeglass lens for vision correction, a lens for an imaging device, a Fresnel lens for a liquid crystal projector, and a lenticular lens.

<Roll>

The roll of the present embodiment includes the thiourethane film of the present embodiment and a core, and the thiourethane film is wound in a roll shape around the core.

The thiourethane film of the present embodiment has improved winding properties in a case of being wound around a core.

<Lens>

The lens of the present embodiment is a lens including the thiourethane film of the present embodiment, and is, for example, a lens obtained by bonding the thiourethane film of the present embodiment to a lens substrate. In addition, in the lens according to the present embodiment, the thiourethane film and the lens substrate may be in direct contact with each other.

As the lens substrate, the above-described material can be used.

Examples of the lens include various plastic lenses such as the above-described plastic eyeglass lens, sunglasses, goggles, an eyeglass lens for vision correction, a lens for an imaging device, a Fresnel lens for a liquid crystal projector, and a lenticular lens.

In addition, when the lens contains a hard coat layer, an anti-reflection layer, and the like, the laminated structure

can be the above-described laminated order.

<Method for Producing Laminated Lens>

The method for producing a laminated lens according to the present embodiment includes a step of obtaining the thiourethane film according to the present embodiment and a bonding step of bonding the obtained thiourethane film to a lens substrate.

In the bonding step in the method for producing a laminated lens according to the present embodiment, it is preferable to bond the thiourethane film to the lens substrate by one or two selected from the group consisting of vacuum forming and pressure forming, and it is more preferable to perform the vacuum forming and the pressure forming at the same time. In addition, the heating may be performed while performing vacuum forming or pressure forming as necessary.

In the method for producing a laminated lens according to the present embodiment, since the thiourethane film according to the present embodiment is used, the thiourethane film has appropriate flexibility, and the thiourethane film can be subjected to vacuum forming or pressure forming.

<Glasses>

The glasses according to the present embodiment preferably include the lens according to the present embodiment described above, that is, include the thiourethane film according to the present embodiment.

<Method for Producing (Thio)urethane-based Resin Film>

The method for producing a (thio)urethane-based resin film of the present embodiment includes a first polymerization step of irradiating a film consisting of a photopolymerizable composition which contains an active-hydrogen compound, an isocyanate compound, a photopolymerization initiator, and a metal catalyst and is provided on a substrate with ultraviolet rays to polymerize a part of the photopolymerizable composition, and a second polymerization step of heating the photopolymerizable composition after the first polymerization step to further polymerize the photopolymerizable composition.

The above-described thiourethane film of the present embodiment can be produced by using a polythiol described later as an active-hydrogen compound in the method for producing a (thio)urethane-based resin film of the present embodiment.

The (thio)urethane-based resin film can be produced by a casting method, but in a case of being formed by the casting method, contraction marks may occur. It is presumed that the contraction marks are generated by the contraction of the film when the film is cooled.

According to the method for producing a (thio)urethane-based resin film of the present embodiment, the appearance of the obtained film is improved, and the production efficiency can be improved.

The reason for this is not clear, but is considered as follows. The (thio)urethane-based resin film can be polymerized by only the step of heating the photopolymerizable composition, but it takes a long time until the film is completely polymerized. By performing a photopolymerization step of irradiating the photopolymerizable composition with ultraviolet rays before the heating step, the polymerization time can be shortened. In addition, when only the heating step is performed, a contraction mark is generated on the (thio)urethane-based resin film, and the appearance become worse. On the other hand, when only photopolymerization is performed, the polymerization of the photopolymerizable composition is incomplete, and the obtained polymerized substance has hygroscopicity. Therefore, in a step of attaching the (thio)urethane-based resin film to the lens substrate after polymerization, air bubbles or water bubbles enter the (thio)urethane-based resin film, which causes poor appearance. It is considered that the polymerization time can be shortened by carrying out the ultraviolet irradiation step on the photopolymerizable composition and then carrying out the thermal polymerization, and the appearance of the obtained (thio)urethane-based resin film can be improved.

In the present embodiment, the (thio)urethane-based resin means one or two or more selected from the group consisting of thiourethane, urethane, and urethane urea. The thiourethane represents a compound having a thiourethane bond formed by a reaction between a polythiol component and an isocyanate component, the urethane represents a compound having a urethane bond formed by a reaction between a polyol component and an isocyanate component, and the urethane urea represents a compound having a urethane urea bond formed by a reaction between a polyamine component and an isocyanate component. Among these, one or two or more selected from the group consisting of thiourethane and urethane are preferable, and thiourethane is more preferable. In addition, among the (thio)urethane-based resin films, one or two or more selected from the group consisting of a thiourethane film and a urethane film are preferable, and a thiourethane film is more preferable.

[Active-hydrogen Compound]

The photopolymerizable composition in the method for producing a (thio)urethane-based resin film according to the present embodiment contains an active-hydrogen compound.
The active-hydrogen compound preferably includes at least one selected from the group consisting of a polythiol, a polyol, and a polyamine. In this manner, a thiourethane bond, a urethane bond, or a urea bond can be formed between the active-hydrogen compound and an isocyanate compound described later, and thiourethane, urethane, or urethane urea can be formed.
From the viewpoint of high nucleophilicity and further improving the reactivity with the isocyanate compound, the active-hydrogen compound more preferably includes a polythiol.

(Polythiol)

The polythiol preferably includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane. More preferably, the polythiol is one or two or more selected from the group consisting of bis(2-mercaptoethyl)sulfide, 4-mercaptomethyl-1,8-dimercapto-3,6-dithiaoctane, and pentaerythritol tetrakis(3-mercaptopropionate), and still more preferably, the polythiol is one or two selected from the group consisting of bis(2-mercaptoethyl)sulfide and 4-mercaptomethyl-1,8-dimercapto-3,6-dithiaoctane.
The polythiol preferably includes both a bifunctional polythiol and a trifunctional or higher polythiol.
As a result, the flexibility of the obtained film is in a more appropriate range, and the film can be suitably used for vacuum forming or pressure forming.
The thiol equivalent of the bifunctional polythiol can be appropriately selected depending on the type of the isocyanate compound, and from the viewpoint of appropriately softening the obtained film, it is preferably 15% or more, more preferably 30% or more, still more preferably 40% or more, even still more preferably 50% or more, and even still more preferably 60% or more with respect to 100% of the total thiol equivalent of the bifunctional polythiol and the trifunctional or higher polythiol, and from the viewpoint of appropriately hardening the obtained film, it is preferably 95% or less, more preferably 90% or less, and still more preferably 80% or less.

(Bifunctional Polythiol)

Examples of the bifunctional polythiol include aliphatic polythiol compounds such as methanedithiol, ethanedithiol, 1,3-propanedithiol, 1,2-ethanedithiol, 1,2-cyclohexanedithiol, bis(2-mercaptoethyl) ether, diethylene glycol bis(2-mercaptoacetate), diethylene glycol bis(3-mercaptopropionate), ethylene glycol bis(2-mercaptoacetate), ethylene glycol bis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 2,5-dimercaptomethyl-1,4-dithiane, 2,5-dimercapto-1,4-dithiane, 2,5-dimercaptomethyl-2,5-dimethyl-1,4-dithiane, and thioglycolic acid and mercaptopropionic acid esters thereof;

aromatic polythiol compounds such as bis(2-mercaptoethyl) sulfide, hydroxymethylsulfidebis(2-mercaptoacetate), hydroxymethylsulfidebis(3-mercaptopropionate), hydroxyethylsulfidebis(2-mercaptoacetate), hydroxyethylsulfidebis(3-mercaptopropionate), hydroxymethyldisulfidebis(2-mercaptoacetate), hydroxymethyldisulfidebis(3-mercaptopropionate), hydroxyethyldisulfidebis(2-mercaptoacetate), hydroxyethyldisulfidebis(3-mercaptopropinate), 2-mercaptoethyl ether bis(2-mercaptoacetate), 2-mercaptoethyl ether bis(3-mercaptopropionate), bis(2-mercaptoethyl ester) thiodiglycolate, bis(2-mercaptoethyl ester) thiodipropionate, bis(2-mercaptoethyl ester) dithiodiglycolate, bis(2-mercaptoethyl ester) dithiodipropionate, and 4,6-bis(mercaptomethylthio)-1,3-dithiane;
aromatic polythiol compounds such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 2,5-toluenedithiol, 3,4-toluenedithiol, 1,5-naphthalenedithiol, and 2,6-naphthalenedithiol;
heterocyclic polythiol compounds such as 2-methylamino-4,6-dithiol-sym-triazine, 3,4-thiophenedithiol, bismuthiol, 4,6-bis(mercaptomethylthio)-1,3-dithiane, 2-(2,2-bis(mercaptomethylthio) ethyl)-1,3-dithiethane; and the like.

Among these, the bifunctional polythiol includes one or two or more selected from the group consisting of 2,5-bis(mercaptomethyl)-1,4-dithiane, bis(2-mercaptoethyl)sulfide, and 4,6-bis(mercaptomethylthio)-1,3-dithiane.

(Trifunctional or Higher Polythiol)

Examples of the trifunctional or higher polythiol include 1,2,3-propanetrithiol, tetrakis(mercaptomethyl) methane, trimethylolpropanetris(2-mercaptoacetate), trimethylolpropanetris(3-mercaptopropionate), trimethylolethanetris(2-mercaptoacetate), trimethylolethanetris(3-mercaptopropionate), pentaerythritol tetrakis(2-mercaptoacetate), pentaerythritol tetrakis(3-mercaptopropionate), 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, and thioglycolic acid esters and mercaptopropionic acid esters thereof;

aliphatic polythiol compounds such as 1,1,3,3-tetrakis(mercaptomethylthio) propane, 1,1,2,2-tetrakis(mercaptomethylthio) ethane, tris(mercaptomethylthio) methane, and tris(mercaptoethylthio) methane;
aromatic polythiol compounds such as 1,3,5-trimercaptobenzene, 1,3,5-tris(mercaptomethyl) benzene, 1,3,5-tris(mercaptomethyleneoxy) benzene, and 1,3,5-tris(mercaptoethyleneoxy) benzene;
a heterocyclic polythiol compound such as 2,4,6-trimercapto-s-triazine, 2,4,6-trimercapto-1,3,5-triazine, or 2-(2,2-bis(methylthiomethyl)ethyl)-1,3-dithiethane; and the like.

The trifunctional or higher polythiol preferably includes one or more selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(2-mercaptoacetate), pentaerythritol tetrakis(3-mercaptopropionate), 1,1,3,3-tetrakis(mercaptomethylthio)propane, 2-(2,2-bis(mercaptomethylthio)ethyl)-1,3-dithiethane, 1,1,2,2-tetrakis(mercaptomethylthio) ethane, 3-mercaptomethyl-1,5-dimercapto-2,4-dithiapentane, and tris(mercaptomethylthio)methane. Among these, one or two or more selected from the group consisting of 4-mercaptomethyl-1,8-dimercapto-3,6-dithiaoctane and pentaerythritol tetrakis(3-mercaptopropionate) are more preferable, and 4-mercaptomethyl-1,8-dimercapto-3,6-dithiaoctane is still more preferable.

The polythiol of the present embodiment preferably includes one or two or more bifunctional polythiols selected from the group consisting of 2,5-bis(mercaptomethyl)-1,4-dithiane, bis(2-mercaptoethyl)sulfide, and 4,6-bis(mercaptomethylthio)-1,3-dithiane, and 4-mercaptomethyl-1,8-dimercapto-3,6-dithiaoctane which is a trifunctional or higher polythiol. The polythiol more preferably includes bis(2-mercaptoethyl)sulfide and 4-mercaptomethyl-1,8-dimercapto-3,6-dithiaoctane.

(Polyol)

Examples of the polyol include aliphatic polyols such as ethylene glycol, diethylene glycol, propylene glycol, dipropylene glycol, tripropylene glycol, butylene glycol, neopentyl glycol, glycerin, trimethylolethane, trimethylolpropane, ditrimethylolpropane, butanetriol, pentaerythritol, sorbitol, triethylene glycol, polyethylene glycol, cyclohexanediol, cyclohexanedimethanol, and tricyclo[5.2.1.0$^{2,6}$]decane-dimethanol; and aromatic polyols such as dihydroxynaphthalene, trihydroxynaphthalene, tetrahydroxynaphthalene, dihydroxybenzene, benzene triol, biphenyl tetraol, pyrogallol, (hydroxynaphthyl)pyrogallol, trihydroxyphenanthrene, bisphenol A, bisphenol F, xylylene glycol, di(2-hydroxyethoxy)benzene, bisphenol A-bis-(2-hydroxyethyl ether), tetrabromobisphenol A, and tetrabromobisphenol A-bis-(2-hydroxyethyl ether).

(Polyamine)

Examples of the polyamine include low-molecular-weight diamines such as ethylenediamine, 1,3-propanediamine, 1,3- or 1,4-butanediamine, 1,6-hexamethylenediamine, 1,4-cyclohexanediamine, 3-aminomethyl-3,5,5-trimethylcyclohexylamine (isophoronediamine), 4,4'-dicyclohexylmethanediamine, 2,5(2,6)-bis(aminomethyl)bicyclo[2.2.1]heptane, 1,3-bis(aminomethyl)cyclohexane, hydrazine, and o-, m-, or p-tolylene diamine (TDA, OTD); low-molecular-weight triamines such as diethylenetriamine; and low-molecular-weight polyamines having 4 or more amino groups such as triethylenetetramine and tetraethylenepentamine. These polyamines can be used alone or in combination of two or more kinds thereof.

(Isocyanate Compound)

The photopolymerizable composition in the method for producing a (thio)urethane-based resin film according to the present embodiment contains an isocyanate compound.

The isocyanate compound preferably includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate, and more preferably includes at least one selected from the group consisting of 2,5-bis(isocyanatomethyl)bicyclo-[2.2.1]-heptane, 2,6-bis(isocyanatomethyl)bicyclo-[2.2.1]-heptane, and xylylene diisocyanate.

The equivalent ratio of the thiol group in the polythiol to the isocyanato group in the isocyanate compound (thiol group/isocyanato group) is preferably 0.8 or more, more preferably 0.85 or more, and still more preferably 0.9 or more, and is preferably 1.2 or less, more preferably 1.15 or less, and still more preferably 1.1 or less.

In addition, the equivalent ratio of the hydroxyl group in the polyol to the isocyanato group in the isocyanate compound (hydroxyl group/isocyanato group) is preferably 0.8 or more, more preferably 0.85 or more, and still more preferably 0.9 or more, and is preferably 1.2 or less, more preferably 1.15 or less, and still more preferably 1.1 or less.

In addition, the equivalent ratio of the amino group in the polyamine to the isocyanato group in the isocyanate compound (amino group/isocyanato group) is preferably 0.8 or more, more preferably 0.85 or more, and still more preferably 0.9 or more, and is preferably 1.2 or less, more preferably 1.15 or less, and still more preferably 1.1 or less.

By setting the equivalent ratio of the active hydrogen generating functional group in the active-hydrogen compound to the isocyanato group in the isocyanate compound within the above-described range, thiourethane, urethane, or urethane urea, which is suitably used as a lens material, can be obtained.

When the entire photopolymerizable composition is set to 100% by mass, the total of the content of the active-hydrogen compound and the content of the isocyanate compound is preferably 50% by mass or more, more preferably 70% by mass or more, still more preferably 80% by mass or more, even still more preferably 90% by mass or more, even still more preferably 95% by mass or more, even still more preferably 97% by mass or more, and even still more preferably 99% by mass or more, and is preferably 100% by mass or less and more preferably less than 100% by mass.

(Photopolymerization initiator)

The photopolymerizable composition contains a photopolymerization initiator. The photopolymerization initiator is an initiator capable of performing photopolymerization, and preferably includes one or two or more selected from the group consisting of a radical polymerization initiator and a base generator, and from the viewpoint of further improving photopolymerization properties, more preferably includes a base generator.

(Base Generator)

Preferred examples of the base generator include a compound consisting of an organic boron anion and a counter cation.

The organic boron anion more preferably includes one or two or more selected from the group consisting of a phenyl group, an alkyl group, and an aryl group, and still more preferably includes one or two or more selected from the group consisting of a phenyl group and an alkyl group.

The counter cation more preferably includes one or two or more selected from the group consisting of ammonium and an ammonium salt, and still more preferably includes an ammonium salt.

The base generator more preferably includes one or two or more selected from the group consisting of a compound represented by Formula (1) and a compound represented by Formula (2).

[chem. 5]

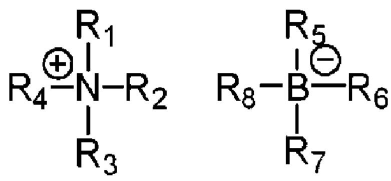

(1)

In Formula (1), $R_1$ to $R_4$ each independently preferably represent an alkyl group having 1 to 8 carbon atoms, $R_5$ to $R_8$ each independently preferably represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.

In Formula (1), $R_1$ to $R_4$ are preferably the same.

$R_1$ to $R_4$ are more preferably an alkyl group having 2 to 5 carbon atoms, still more preferably a linear alkyl group, and even still more preferably an n-butyl group.

In Formula (1), $R_8$ is more preferably an alkyl group having 2 to 5 carbon atoms, still more preferably a linear alkyl group, and even still more preferably an n-butyl group.

In Formula (1), $R_5$ to $R_7$ are preferably the same.

$R_5$ to $R_7$ are more preferably a phenyl group, a butylphenyl group, or a naphthyl group, and still more preferably a phenyl group, a 4-tert-butylphenyl group, a 1-naphthyl group, or a 4-methyl-1-naphthyl group.

When $R_5$ to $R_7$ include an aromatic ring, the aromatic ring may be substituted with an alkyl group, an aryl group, or the like.

The compound represented by Formula (1) is preferably at least one selected from the group consisting of tetra(n-butyl)ammonium=n-butyltriphenylborate, tetra(n-butyl)ammonium=n-butyltri(4-tert-butylphenyl)borate, tetra(n-butyl)ammonium=n-butyltri(1-naphthyl)borate, and tetra(n-butyl)ammonium=n-butyltri(4-methyl-1-naphthyl)borate. In addition, "=" in the compound name means an ionic bond.

Among these, from the viewpoint of further improving the performance balance of solubility, polymerization properties, and pot life, the compound represented by Formula (1) is more preferably at least one selected from the group consisting of tetra(n-butyl)ammonium=n-butyltriphenylborate and tetra(n-butyl)ammonium=n-butyltr(1-naphthyl)borate.

[chem. 6]

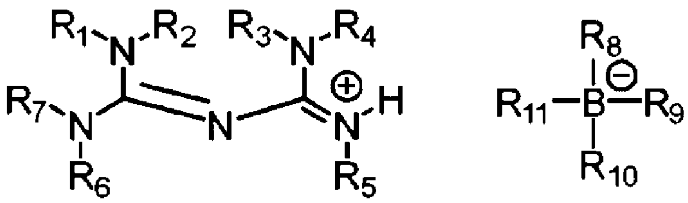

(2)

In Formula (2), $R_1$ to $R_7$ each independently represent an alkyl group having 1 to 8 carbon atoms or a cycloalkyl group having 3 to 8 carbon atoms, $R_8$ to $R_{11}$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.

In Formula (2), $R_1$ to $R_7$ are preferably the same.

$R_1$ to $R_7$ are each preferably an alkyl group having 2 to 5 carbon atoms, more preferably a linear alkyl group, and still more preferably an n-butyl group.

In Formula (2), $R_{11}$ is more preferably an alkyl group having 2 to 5 carbon atoms, still more preferably a linear alkyl group, and even still more preferably an n-butyl group.

In Formula (2), $R_8$ to $R_{10}$ are preferably the same.

$R_8$ to $R_{10}$ are more preferably a phenyl group, a butylphenyl group, or a naphthyl group, and still more preferably a phenyl group, a 4-tert-butylphenyl group, a 1-naphthyl group, or a 4-methyl-1-naphthyl group.

When $R_8$ to $R_{10}$ include an aromatic ring, the aromatic ring may be substituted with an alkyl group, an aryl group, or the like.

(Radical Polymerization Initiator)

As the radical polymerization initiator, a known thermal radical polymerization initiator and a known photoradical polymerization initiator can be used.

Examples of heat radical polymerization initiators include dialkyl peroxides such as dicumyl peroxide, t-butyl cumyl peroxide, 2,5-bis(t-butylperoxy) 2,5-dimethylhexane, 2,5-bis(t-butylperoxy) 2,5-dimethyl hexyne-3, di-t-butyl peroxide, isopropyl cumyl-t-butyl peroxide, and bis($\alpha$-t-butylperoxy isopropyl)benzene; peroxy ketals such as 1,1-bis(t-butylperoxy) cyclohexane, 1,1-bis(t-butylperoxy) 3,3,5-trimethylcyclohexane, 1,1-bis(t-butylperoxy) cyclododecane, n-butyl-4,4-bis(t-butylperoxy) valerate, ethyl 3,3-bis(t-butylperoxy) butyrate, 3,3,6,6,9,9-hexamethyl-1,2,4,5-tetraoxycyclononane; peroxy esters such as bis(t-butylperoxy) isophthalate, t-butylperoxybenzoate, and t-butylperoxyacetate; hydroperoxides such as t-butyl hydroperoxide, t-hexyl hydroperoxide, cumin hydroperoxide, 1,1,3,3-tetramethylbutyl hydroperoxide, diisopropylbenzene hydroperoxide, and p-menthane hydroperoxide; bibenzyl compounds such as 2,3-dimethyl-2,3-diphenylbutane; and 3,3,5,7,7-pentamethyl-1,2,4-trioxepane.

Examples of the photoradical polymerization initiator include benzoin alkyl ether, benzyl dimethyl ketal, 1-hydroxycyclohexyl phenyl ketone, 2-hydroxy-2-methyl-1-phenylpropan-1-one, benzophenone, methyl benzoyl formate, isopropyl thioxantone, and a mixture of two or more thereof. In addition, a sensitizer can also be used together with the photoradical polymerization initiator. Examples of the sensitizer include carbonyl compounds such as anthraquinone, 1,2-naphthoquinone, 1,4-naphthoquinone, benzanthrone, p,p'-tetramethylbenzophenone, and chloranil; nitro compounds such as nitrobenzene, p-dinitrobenzene, and 2-nitrofluorene; aromatic hydrocarbons such as anthracene and chrysene; sulfur compounds such as diphenyldisulfide; and nitrogen compounds such as nitroaniline, 2-chloro-4-nitroaniline, 5-nitro-2-aminotoluene, and tetracyanoethylene.

From the viewpoint of further improving the photopolymerization properties, the content of the photopolymerization initiator is preferably 250 ppm by mass or more, more preferably 300 ppm by mass or more, still more preferably 500 ppm by mass or more, even still more preferably 700 ppm by mass or more, even still more preferably 1000 ppm by mass or more, even still more preferably 1200 ppm by mass or more, even still more preferably 1300 ppm by mass or more, even still more preferably 1400 ppm by mass or more, even still more preferably 1500 ppm by mass or more, and even still more preferably 2000 ppm by mass or more, with respect to the total amount of the active-hydrogen compound and the isocyanate compound. From the viewpoint of further suppressing coloration of the film, the content of the photopolymerization initiator is preferably 20000 ppm by mass or less, more preferably 15000 ppm by mass or less, still more preferably 12000 ppm by mass or less, even still more preferably 10000 ppm by mass or less, even still more preferably 8000 ppm by mass or less, even still more preferably 6000 ppm by mass or less, even still more preferably 5000 ppm by mass or less, even still more preferably 4500 ppm by mass or less, even still more preferably 4000 ppm by mass or less, even still more preferably 3500 ppm by mass or less, even still more preferably 3000 ppm by mass or less, even still more preferably 2500 ppm by mass or less, even still more preferably 2300 ppm by mass or less, and even still more preferably 2100 ppm by mass or less.

In addition, from the viewpoint of further improving the photopolymerization properties and further enabling the formation of a thiourethane film, the content of the photopolymerization initiator is preferably 250 ppm by mass or more and 20000 ppm by mass or less, more preferably 300 ppm by mass or more and 15000 ppm by mass or less, still more preferably 500 ppm by mass or more and 10000 ppm by mass or less, even still more preferably 700 ppm by mass or more and 8000 ppm by mass or less, and even still more preferably 700 ppm by mass or more and 6000 ppm by mass or less with respect to the total amount of the active-hydrogen compound and the isocyanate compound.

In addition, the content of the photopolymerization initiator is more preferably 1000 ppm by mass or more and 5000 ppm by mass or less, still more preferably 1200 ppm by mass or more and 4500 ppm by mass or less, even still more preferably 1300 ppm by mass or more and 4500 ppm by mass or less, even still more preferably 1400 ppm by mass or more and 4000 ppm by mass or less, even still more preferably 1500 ppm by mass or more and 2500 ppm by mass or less, and even still more preferably 2000 ppm by mass or more and 2300 ppm by mass or less, with respect to the total amount of the active-hydrogen compound and the isocyanate compound.

When the content of the photopolymerization initiator is 1000 ppm by mass or more, the Young's modulus of the obtained film can be further reduced, and the winding properties can be further improved. In addition, when the content of the photopolymerization initiator is 5000 ppm by mass or less, the coloration of the film can be further suppressed, when the content of the photopolymerization initiator is 2500 ppm by mass or less, the Young's modulus of the film can be moderately increased, and the winding property can be further improved, and when the content of the photopolymerization

initiator is 2300 ppm by mass or less, the yellowness (YI value) of the film can be further decreased, and the appearance of the film can be further improved.

The unit (ppm by mass) of the content of the photopolymerization initiator represents the content (mg) of the photopolymerization initiator per total 1 kg of the active-hydrogen compound and the isocyanate compound, that is, mg/kg.

[Metal Catalyst]

The photopolymerizable composition contains a metal catalyst.

Examples of the metal catalyst include an organic tin compound, an organic lead compound, an organic nickel compound, an organic copper compound, an organic bismuth compound, and a potassium salt. Among these, from the viewpoint of adjusting the viscosity of the mixed solution A containing an active-hydrogen compound, an isocyanate compound, and a metal catalyst, which will be described later, to a more appropriate range, the metal catalyst preferably includes an organic tin compound.

Examples of the organic tin compound include tin acetate, tin octoate, tin oleate, tin laurate, monobutyltin trioctate, dibutyltin diacetate, dimethyltin dilaurate, dibutyltin dilaurate, dibutyltin dimercaptide, dibutyltin maleate, dibutyltin dineodecanoate, dioctyltin dimercaptide, dioctyltin dilaurylate, dimethyltin dichloride, and dibutyltin dichloride, and one or two or more selected from the group consisting of dimethyltin dichloride and dibutyltin dichloride are preferable.

From the viewpoint of further improving the polymerization properties and further improving the viscosity of the mixed solution A described later, the content of the metal catalyst is preferably 0.1 ppm or more, more preferably 0.5 ppm or more, still more preferably 1 ppm or more, and even still more preferably 5 ppm or more with respect to the total amount of the active-hydrogen compound and the isocyanate compound, and from the viewpoint of preventing the viscosity of the mixed solution A described later from becoming excessively high, the content of the metal catalyst is preferably 45 ppm or less, more preferably 40 ppm or less, and still more preferably 35 ppm or less.

The unit (ppm) of the content of the metal catalyst represents the content (mg) of the metal catalyst per total 1 kg of the active-hydrogen compound and the isocyanate compound, that is, mg/kg.

[Other Components]

The photopolymerizable composition of the present embodiment may further contain an ultraviolet absorber, an antioxidant, a light stabilizer, a sensitizer, a release agent, a solvent, a blueing agent, an IR cut agent, a blue light cut agent, a reactive diluent, an oil-soluble dye, a pigment, a dye, a fragrance, a filler, an adhesiveness improver such as a coupling agent, a chain extender, a crosslinking agent, an antifoaming agent, a precipitate inhibitor, a dispersing agent, a plasticizer, a sagging inhibitor, an antifouling agent, a preservative, a fungicide, a bactericide, an anti-mold agent, a matting agent, a thickener, a pigment dispersing agent, a cissing inhibitor, a scratch resistance improver, a slip agent, a surface modifier, a color separation inhibitor, an emulsifier, a skinning inhibitor, a drying agent, an antistatic agent, a conductive agent (an electrostatic auxiliary agent), a flame retardant, a thermal conductivity improver, a plasticizer, an ion exchange resin, and the like.

Examples of the release agent include an acidic phosphoric acid ester compound, a polyether-modified silicone, an alkyl-modified silicone, a polyester-modified silicone, a dimethyl polysiloxane, a polyoxyalkylene glycol monoalkyl ether compound, a polyoxyalkylene glycol monoester compound, a fluorine atom-containing compound, a surfactant, a nonionic surfactant, and an acrylic surfactant.

The content of the release agent is preferably 20 ppm or more, more preferably 50 ppm or more, still more preferably 100 ppm or more, even still more preferably 200 ppm or more, even still more preferably 500 ppm or more, and even still more preferably 1000 ppm or more, and is preferably 5000 ppm or less, more preferably 3000 ppm or less, even still more preferably 2000 ppm or less, even still more preferably 1800 ppm or less, even still more preferably 1500 ppm or less, and even still more preferably 1300 ppm or less, with respect to the total amount of the active-hydrogen compound and the isocyanate compound.

[First Polymerization Step]

The first polymerization step is a step of irradiating a film consisting of a photopolymerizable composition provided on a substrate with ultraviolet rays to polymerize a part of the photopolymerizable composition.

In the method for producing a (thio)urethane-based resin film of the present embodiment, the polymerization time can be shortened by including a step of irradiating the photopolymerizable composition with ultraviolet rays.

Ultraviolet rays include UVC having a wavelength of 250 to 260 nm and UVA having a wavelength of 320 to 390 nm, and the ultraviolet rays affecting the photopolymerization in the ultraviolet rays to be emitted in the first polymerization step are UVC.

When ultraviolet rays are used, a light source such as sunlight, a chemical lamp, a mercury lamp, a metal

halide lamp, or a UV LED can be used.

From the viewpoint of making the appearance of the obtained film more satisfactory, the integrated light amount of the ultraviolet irradiation in the first polymerization step is preferably 500 mJ or more, more preferably 1000 mJ or more, still more preferably 1200 mJ or more, and even still more preferably 1500 mJ or more, and is preferably 10000 mJ or less, more preferably 9500 mJ or less, still more preferably 9000 mJ or less, even still more preferably 6000 mJ or less, even further still more preferably 5000 mJ or less, even further still more preferably 4000 mJ or less, even further still even more preferably 3800 mJ or less, even further still even more preferably 3500 mJ or less, and even further still even more preferably 3000 mJ or less.

The integrated light amount of ultraviolet irradiation represents a total integrated light amount of UVC and UVA.

From the viewpoint of making the appearance of the film to be obtained more favorable, the irradiation intensity of the ultraviolet irradiation in the first polymerization step is preferably 100 mW or more, more preferably 150 mW or more, and still more preferably 200 mW or more, and is preferably 2000 mW or less, more preferably 1800 mW or less, still more preferably 1600 mW or less, even still more preferably 1000 mW or less, even still more preferably 800 mW or less, even further still more preferably 600 mW or less, and even further still more preferably 400 mW or less.

The irradiation intensity of the ultraviolet irradiation represents the total irradiation intensity of UVC and UVA.

From the viewpoint of obtaining a more favorable appearance of the film to be obtained, the integrated light amount of UVC during the ultraviolet irradiation in the first polymerization step is preferably 100 mJ or more, more preferably 150 mJ or more, still more preferably 200 mJ or more, and even still more preferably 250 mJ or more, and is preferably 4000 mJ or less, more preferably 3500 mJ or less, still more preferably 3000 mJ or less, even still more preferably 2500 mJ or less, even still more preferably 2000 mJ or less, even still more preferably 1200 mJ or less, even still more preferably 1000 mJ or less, even still more preferably 800 mJ or less, and even still more preferably 600 mJ or less, and even still more preferably 500 mJ or less, and even still more preferably 300 mJ or less.

From the viewpoint of making the appearance of the film to be obtained more satisfactory, the irradiation intensity of UVC in the ultraviolet irradiation in the first polymerization step is preferably 10 mW or more, more preferably 20 mW or more, still more preferably 30 mW or more, even more preferably 40 mW or more, even still more preferably 50 mW or more, and even still more preferably 60 mW or more, and is preferably 200 mW or less, more preferably 150 mW or less, and still more preferably 100 mW or less.

The integrated light amount of UVA in the ultraviolet irradiation in the first polymerization step is preferably 500 mJ or more, more preferably 1000 mJ or more, and still more preferably 1300 mJ or more, and is preferably 8000 mJ or less, more preferably 7500 mJ or less, still more preferably 7000 mJ or less, even still more preferably 5000 mJ or less, even still more preferably 4000 mJ or less, even still more preferably 3800 mJ or less, even still more preferably 3500 mJ or less, and even still more preferably 2000 mJ or less.

The irradiation intensity of UVA in the ultraviolet irradiation in the first polymerization step is preferably 50 mW or more, more preferably 100 mW or more, and still more preferably 150 mW or more, and is preferably 3000 mW or less, more preferably 2500 mW or less, still more preferably 800 mW or less, even still more preferably 500 mW or less, and even still more preferably 300 mW or less.

The first polymerization step preferably further includes a step of coating a substrate with the photopolymerizable composition to form a film.

The thickness of the photopolymerizable composition applied onto the substrate is preferably 50 μm or more, more preferably 100 μm or more, still more preferably 150 μm or more, even still more preferably 200 μm or more, and even still more preferably 250 μm or more, and is preferably 3 mm or less, more preferably 2 mm or less, still more preferably 1 mm or less, even still more preferably 600 μm or less, and even still more preferably 400 μm or less.

By setting the thickness of the photopolymerizable composition applied onto the substrate to be equal to or greater than the above-described lower limit value, it is possible to easily peel the (thio)urethane-based resin film from the substrate. In addition, by setting the thickness of the photopolymerizable composition applied onto the substrate to be equal to or less than the above-described upper limit value, the substrate can be coated with a uniform thickness.

In addition, by performing the coating within the above-described range, the thickness of the obtained (thio) urethane-based resin film can be set to a range described later.

The photopolymerizable composition can be applied using a known method in the related art, and can be applied using a bar coater, a spin coater, a dip coater, or the like.

The substrate used in the first polymerization step is preferably a release film.

The release film includes at least one selected from the group consisting of polyethylene terephthalate and a fluororesin, and more preferably includes polyethylene terephthalate.

In addition, the release film is preferably a silicon-coated or non-silicon-coated film, and more preferably a non-silicon-coated polyethylene terephthalate film.

Examples of a commercially available product of such a non-silicon-coated polyethylene terephthalate film include SERAPEARL (registered trademark) manufactured by Toray Industries, Inc.

The thickness of the substrate used in the first polymerization step is preferably 30 μm or more, more preferably 100 μm or more, still more preferably 150 μm or more, and even still more preferably 200 μm or more, and is preferably 1 mm or less, more preferably 800 μm or less, still more preferably 500 μm or less, and even still more preferably 300 μm or less.

In the substrate used in the first polymerization step, from the viewpoint of further improving the releasability of the substrate and making it easier to peel off the substrate after the photopolymerizable composition is fully polymerized, the water contact angle of the surface of the substrate is preferably 60.0° or more, more preferably 63.0° or more, still more preferably 65.0° or more, and even still more preferably 68.0° or more, and from the viewpoint of further improving the wettability of the substrate and further improving the coatability of the photopolymerizable composition, the water contact angle of the surface of the substrate is preferably 100.0° or less, more preferably 90.0° or less, still more preferably 80.0° or less, and even still more preferably 75.0° or less.

The method for producing a (thio)urethane-based resin film of the present embodiment preferably further includes a viscosity adjustment step of adjusting the viscosity of the mixed solution A containing an active-hydrogen compound, an isocyanate compound, and a metal catalyst.

It is preferable that the viscosity adjustment step is performed before the first polymerization step.

The viscosity of the mixed solution A in the viscosity adjustment step is preferably 50 mPa·s or more, more preferably 80 mPa·s or more, still more preferably 100 mPa·s or more, even still more preferably 130 mPa·s or more, even still more preferably 150 mPa·s or more, and even still more preferably 170 mPa·s or more, and is preferably 2000 mPa·s or less, more preferably 1500 mPa·s or less, still more preferably 1000 mPa·s or less, even still more preferably 700 mPa·s or less, even still more preferably 600 mPa·s or less, even still more preferably 500 mPa·s or less, even still more preferably 400 mPa·s or less, even still more preferably 300 mPa·s or less, and even still more preferably 200 mPa·s or less.

When the viscosity of the mixed solution A is equal to or higher than the above-described lower limit value, the photopolymerizable composition can be applied in a thick and uniform manner, and when the viscosity of the mixed solution A is equal to or lower than the above-described upper limit value, the coating property in a case of applying the photopolymerizable composition is improved, and the pot life can be extended.

The viscosity of the mixed solution A in the viscosity adjustment step is measured at 23°C using a vibration type viscometer. As the vibration type viscometer, VM-10A-M type manufactured by Sekonic Instruments Inc. can be used.

In the viscosity adjustment step, the viscosity can be adjusted to the above range by heating the mixed solution A containing an active-hydrogen compound, an isocyanate compound, and a metal catalyst to perform prepolymerization.

From the viewpoint of appropriately increasing the viscosity of the mixed solution A, the heating temperature of the mixed solution A in the viscosity adjustment step is preferably 70°C or higher and more preferably 75°C or higher, and from the viewpoint of preventing the viscosity of the mixed solution A from excessively increasing, the heating temperature of the mixed solution A in the viscosity adjustment step is preferably 90°C or lower and more preferably 85°C or lower.

From the viewpoint of appropriately increasing the viscosity of the mixed solution A, the heating time of the mixed solution A in the viscosity adjustment step is preferably 120 minutes or longer, more preferably 150 minutes or longer, still more preferably 200 minutes or longer, and even more preferably 220 minutes or longer, and from the viewpoint of preventing the viscosity of the mixed solution A from excessively increasing, the heating time of the mixed solution A is preferably 300 minutes or shorter and more preferably 280 minutes or shorter. By setting the heating time of the mixed solution A to be equal to or less than the above-described upper limit value, the reaction rate of the active-hydrogen compound and the isocyanate compound in the mixed solution A is slowed down, and the increase in viscosity can be suppressed.

The method for producing a (thio)urethane-based resin film of the present embodiment preferably further includes, after the above-described viscosity adjustment step, a step of mixing the mixed solution A with a mixed solution B containing an isocyanate compound and a photopolymerization initiator.

The above-described step of mixing the mixed solution A and the mixed solution B can be performed before the first polymerization step.

In addition, by including a step of separately preparing the mixed solution A containing an active-hydrogen compound, an isocyanate compound, and a metal catalyst, and the mixed solution B containing an isocyanate compound and a photopolymerization initiator, and then mixing the mixed solutions A and B, it is possible to adjust the viscosity only with the mixed solution A containing only the metal catalyst as a catalyst, and by mixing the mixed solutions A and B immediately before the application of the photopolymerizable composition, it is easy to set the viscosity of the entire photopolymerizable composition during the application to an appropriate range.

In addition, in the mixed solution A, by adjusting the heating temperature and the heating time to set the viscosity in an appropriate range, the increase in viscosity is suppressed even during long-term storage, and the viscosity for thick and uniform application can be maintained even in a case of being mixed with the mixed solution B and applied.

In addition, by adjusting the viscosity of the mixed solution A to an appropriate range, the increase in viscosity is suppressed even during storage, and it is also possible to produce, transport, and store only the mixed solution A.

[Second Polymerization Step]

The method for producing a (thio)urethane-based resin film according to the present embodiment includes a second polymerization step of heating the photopolymerizable composition after the first polymerization step to further polymerize the photopolymerizable composition.

The second polymerization step is a step of polymerizing an unpolymerized portion in the first polymerization step to obtain a completely polymerized polymerized substance. By performing the second polymerization step, the unreacted isocyanate group and the like in the isocyanate compound react with each other, and the increase in the hygroscopicity of the polymerized substance of the photopolymerizable composition is suppressed, and thus the poor appearance due to the generation of air bubbles and water bubbles in the step of attaching the (thio)urethane-based resin film to the lens substrate can be suppressed.

From the viewpoint of more sufficiently polymerizing the photopolymerizable composition, the heating temperature in the second polymerization step is preferably a temperature of 80°C or higher, more preferably a temperature of 85°C or higher, still more preferably a temperature of 90°C or higher, even more preferably a temperature of 100°C or higher, and even still more preferably a temperature of 110°C or higher, and from the viewpoint of further improving the winding properties of the (thio)urethane-based resin film to be obtained, the heating temperature is preferably 140°C or lower, more preferably 130°C or lower, and still more preferably 125°C or lower.

The heating time in the second polymerization step is preferably 10 minutes or more, more preferably 20 minutes or more, still more preferably 30 minutes or more, and even still more preferably 50 minutes or more, and is preferably 300 minutes or less, more preferably 150 minutes or less, still more preferably 120 minutes or less, even still more preferably 100 minutes or less, and even still more preferably 80 minutes or less.

The (thio)urethane-based resin film preferably further includes a protective film on a surface opposite to the substrate.

By providing the protective film, it is possible to prevent oxygen and moisture from coming into contact with each other during the polymerization of the photopolymerizable composition, and it is possible to prevent air bubbles from occurring in the obtained (thio)urethane-based resin film.

The protective film is not limited as long as it can prevent the infiltration of oxygen and moisture and is heat resistant, and from the viewpoint of easy peeling after the completion of the second polymerization step, a release film is preferable. Using a film with higher releasability is preferable because it allows the (thio)urethane-based resin film to be made thinner, which is preferable. As the release film, for example, a polyethylene terephthalate film can be used.

In addition, from the viewpoint of easy peeling after the completion of the second polymerization step, a protective film having a thickness of preferably 5 μm or more and 150 μm or less can be used.

In the substrate used in the first polymerization step, the contact angle of the substrate with respect to the mixed solution A is preferably 10° or more, more preferably 13° or more, and still more preferably 15° or more, and is preferably 90° or less, more preferably 70° or less, still more preferably 50° or less, and even still more preferably 30° or less.

When the contact angle of the substrate with respect to the mixed solution A is within the above-described range, the photopolymerizable composition is easily applied to the substrate.

The contact angle (°) of the substrate with respect to the mixed solution A is calculated as an arithmetic mean value of contact angles measured at five points in the same sample in accordance with JIS R 3257: 1999, using the mixed solution A containing the active-hydrogen compound, the isocyanate compound, and the metal catalyst, on the substrate cut into 9 cm × 9 cm.

The thickness of the (thio)urethane-based resin film is preferably 50 μm or more, more preferably 70 μm or more, still more preferably 100 μm or more, even still more preferably 130 μm or more, even still more preferably 150 μm or more, even still more preferably 200 μm or more, even still more preferably 250 μm or more, and even still more preferably 300 μm or more, and is preferably 3 mm or less, more preferably 2 mm or less, still more preferably 1 mm or less, even still more preferably 800 μm or less, even still more preferably 650 μm or less, even still more preferably 600 μm or less, even still more preferably 500 μm or less, and even still more preferably 400 μm or less.

In addition, the thickness of the (thio)urethane-based resin film is preferably 50 μm or more and 3000 μm or less, more preferably 70 μm or more and 2000 μm or less, still more preferably 100 μm or more and 1000 μm or less, even still more preferably 130 μm or more and 800 μm or less, even still more preferably 150 μm or more and 650 μm or less, even still more preferably 200 μm or more and 600 μm or less, even still more preferably 250 μm or more and 500 μm or less, even still more preferably 300 μm or more and 450 μm or less, and even still more preferably 300 μm or more and 400 μm or less.

The (thio)urethane-based resin film preferably further includes a primer layer on a surface opposite to the substrate.

The (thio)urethane-based resin film according to the present embodiment can be bonded to a spectacle lens substrate through a primer layer.

The primer layer is preferably a material having high adhesiveness to the lens substrate, and examples thereof

include a primer composition containing a urethane-based resin, an epoxy-based resin, a polyester-based resin, a melamine-based resin, and polyvinyl acetal as a main component, and it preferably contains a polyurethane-based aqueous dispersion.

The primer layer is formed by, for example, a coating method or a dry method. In the coating method, a primer layer is formed by applying a primer composition by a known coating method such as spin coating or dip coating and then solidifying the primer composition. In the dry method, a primer layer is formed by a known dry method such as a CVD method or a vacuum vapor deposition method.

The (thio)urethane-based resin film preferably further contains at least one selected from the group consisting of a hard coat layer and an anti-reflection layer.

When the (thio)urethane-based resin film includes a primer layer, it is preferable that the hard coat layer and the anti-reflection layer are provided on a side of the (thio)urethane-based resin film opposite to the primer layer.

In addition, when both the hard coat layer and the anti-reflection layer are provided, the anti-reflection layer can be formed on the hard coat layer after the hard coat layer is formed on the lens substrate.

The hard coat layer is a coating layer for imparting functions such as scratch resistance, abrasion resistance, moisture resistance, hot water resistance, heat resistance, and weather resistance to the lens surface, and the film thickness thereof is, for example, 0.3 $\mu$m or more and 30 $\mu$m or less.

Generally, for the hard coat layer, a hard coat composition is used which includes an organic silicon compound having curability and one or more oxide fine particles of elements selected from the element group of Si, Al, Sn, Sb, Ta, Ce, La, Fe, Zn, W, Zr, In, and Ti and/or one or more fine particles formed of composite oxides of two or more elements selected from this element group.

In addition to the above components, it is preferable for the hard coat composition to include at least any one of amines, amino acids, metal acetylacetonate complexes, metal salts of organic acids, perchloric acids, salts of perchloric acids, acids, metal chlorides, and multi-functional epoxy compounds. The hard coat composition may be used with an appropriate solvent which does not affect the lens or may be used without a solvent.

The hard coat layer is usually formed by coating a hard coat composition by a known coating method such as spin coating or dip coating and then curing the composition. Examples of curing methods include heat curing, curing methods using energy ray irradiation such as ultraviolet rays or visible light, and the like. In order to suppress the occurrence of interference fringes, it is preferable that the difference in refractive index of the hard coat layer and the lens be in a range of $\pm$0.1.

An anti-reflection layer is usually formed on the hard coat layer as necessary.

The anti-reflection layer may be a single layer or a multilayer. There are inorganic type and organic type anti-reflection layers and, in the case of an inorganic type, inorganic oxides such as $SiO_2$ and $TiO_2$ are used, and the anti-reflection layer is formed by a dry method such as a vacuum deposition method, a sputtering method, an ion plating method, an ion beam assist method, or a CVD method. In the case of an organic type, the anti-reflection layer is formed by a wet method using an organic silicon compound and a composition including silica-based fine particles having an internal cavity.

An anti-fogging coating layer, an antifouling layer, a water-repellent layer, or the like may be formed on the anti-reflection layer as necessary. A method of forming the anti-fogging layer, the antifouling layer, the water-repellent layer, and the like is not particularly limited, and a known method in the related art can be applied.

<Method for Producing Laminated Lens>

The method for producing a laminated lens according to the present embodiment includes a step of obtaining a (thio)urethane-based resin film by the method for producing a (thio)urethane-based resin film according to the present embodiment, and a bonding step of bonding the obtained (thio)urethane-based resin film to a lens substrate.

In the bonding step in the method for producing a laminated lens according to the present embodiment, it is preferable that the (thio)urethane-based resin film is bonded to the lens substrate by one or two selected from the group consisting of vacuum forming and pressure forming, and it is more preferable that vacuum forming and pressure forming are performed at the same time. In addition, the heating may be performed while performing vacuum forming or pressure forming as necessary.

In the method for producing a laminated lens according to the present embodiment, since the (thio)urethane-based resin film obtained by the method for producing a (thio)urethane-based resin film according to the present embodiment is used, the (thio)urethane-based resin film has appropriate flexibility, and the (thio)urethane-based resin film can be subjected to vacuum forming or pressure forming.

The vacuum conditions in the vacuum forming can be, for example, a vacuum state of 0.2 kPa or more and 3 kPa or less.

In addition, the pressurization conditions for the pressure forming can be, for example, a pressurized state of about 100 kPa or more and 300 kPa or less.

The heating temperature can be, for example, about 100°C or higher and 140°C or lower.

The lens substrate used in the method for producing a laminated lens according to the present embodiment preferably includes at least one selected from the group consisting of poly(meth)acrylate, polyethylene terephthalate, polycarbonate, polytriacetyl cellulose, polyvinyl alcohol, polyester, polyamide, polyepoxy, polyepisulfide, polyurethane, and polythiourethane, more preferably includes at least one selected from the group consisting of polyepisulfide, polyurethane, and polythiourethane, and still more preferably includes at least one selected from the group consisting of polyurethane and polythiourethane.

[Use of (Thio)urethane-based Resin Film]

The (thio)urethane-based resin film obtained by the method for producing a (thio)urethane-based resin film of the present embodiment can be used for various plastic lenses such as a member for a display, a plastic eyeglass lens, sunglasses, goggles, an eyeglass lens for vision correction, a lens for an imaging device, a Fresnel lens for a liquid crystal projector, and a lenticular lens.

Although the embodiments of the present invention have been described above, these are examples of the present invention, and various configurations other than the above can be adopted.

In addition, the present invention is not limited to the above-described embodiments, and modifications, improvements, and the like within a range that does not impair the effects of the present invention are included in the present invention. Examples

Hereinafter, the present embodiment will be described in detail with reference to Examples and the like. The present embodiment is not limited to the description of these examples.

<Examples 1a to 6a and Comparative Examples 1a and 2a>

(Raw Material)

- Polythiol 1: bis(2-mercaptoethyl)sulfide
- Polythiol 2: 4-mercaptomethyl-1,8-dimercapto-3,6-dithiaoctane
- Polythiol 3: pentaerythritol tetrakis(3-mercaptopropionate)
- Isocyanate compound 1: mixture of 2,5-bis(isocyanatomethyl)bicyclo-[2.2.1]-heptane and 2,6-bis(isocyanatomethyl)bicyclo-[2.2.1]-heptane
- Isocyanate compound 2: xylylene diisocyanate
- Base generator 1: tetra(n-butyl)ammonium=n-butyltri(1-naphthyl)borate
- Release agent 1: polyether-modified silicone (DOWSIL SH-3749, manufactured by Dow·Toray Industries, Inc.)

(Example 1a)

Isocyanate compound 1: 100 parts by mass of a mixture of 2,5-bis(isocyanatomethyl)bicyclo-[2.2.1]-heptane and 2,6-bis(isocyanatomethyl)bicyclo-[2.2.1]-heptane, 84.2 parts by mass of 4-mercaptomethyl-1,8-dimercapto-3,6-dithiaoctane, 3000 ppm of a base generator 1 and 3000 ppm of a release agent 1 which are incorporated to a total of the polythiol compound (A) and the isocyanate compound (B) were mixed to prepare a mixed solution. This mixed solution was stirred at 25°C for 10 minutes to be completely dissolved, defoamed at 600 Pa for 1 hour, and filtered through a 1 μm PTFE filter to obtain a prepared solution (photopolymerizable composition).

Two glass plates having one side of 15 cm and a plate thickness of 2 mm were disposed at an interval of 350 μm, a PTFE sheet having a thickness of 200 um, which was processed to surround the four sides of the glass plate with a width of 1 cm, was installed, the obtained prepared solution was injected, and the pair of glass plates were clamped and fixed with a clip.

The vicinity of surface of the prepared solution was polymerized by irradiating the prepared solution with ultraviolet rays at an irradiation intensity of 200 mW and an irradiation amount of 6000 mJ for UVA and an irradiation intensity of 70 mW and an irradiation amount of 2100 mJ for UVC, thereby obtaining a semi-cured product sandwiched between glass plates. This semi-cured product was heated at 120°C for 2 hours and then peeled off from the glass plate to obtain a thiourethane film having a size of about 13 cm × 13 cm.

In addition, a 30 cm × 30 cm thiourethane film was obtained in the same manner as described above, except that two glass plates having one side of 40 cm and a plate thickness of 2 mm were used.

(Examples 2a to 6a and Comparative Example 2a)

A thiourethane film was obtained in the same manner as in Example 1a, except that the formulation and the conditions shown in Table 1 were used.

(Comparative Example 1a)

In addition, as Comparative Example 1a, a polyester film, LUMIRROR H10 (thickness: 500 μm) manufactured by Toray Industries, Inc. was used.

For the film of each example, the storage elastic modulus E', the glass transition temperature Tg, the thickness T, the water contact angle, the presence or absence of the boron element, and the restoring force were evaluated using a thiourethane film having a size of about 13 cm × 13 cm. In addition, E' × T was calculated from the results of the storage elastic modulus E' and the thickness T.

In addition, a thiourethane film having a width of 5 cm and a length of 30 cm was cut out from a 30 cm × 30 cm thiourethane film, and the winding property (1) and the winding property (2) were evaluated. The results are listed in Table 1.

[Storage Elastic Modulus E' and Glass Transition Temperature Tg]

A test piece having a width of 5 mm and a length of 30 mm was cut out from the film of each example under the following conditions, the solid viscoelasticity temperature dispersion measurement was performed, and the storage elastic modulus E' (MPa) at 40°C and the glass transition temperature Tg (°C) were measured. The Tg was the peak temperature of tan δ.

Device: dynamic viscoelasticity measuring device RSA-III (manufactured by TA Instruments)
Deformation mode: tensile
Temperature rise rate: 2 °C/min
Frequency: 1 Hz
Setting strain: 0.1%
Environment: under air atmosphere

[Thickness Measurement]

The thickness T of each film of each example was measured at ten arbitrary locations on each film using a digimatic indicator (ID-H0560, manufactured by Mitutoyo Corporation), and the average value thereof was adopted.

[Water Contact Angle]

In accordance with JIS R3257: 1999, the water contact angle of the film of each example was measured at 23°C and 50% RH using a contact angle meter (DMs-401 type, manufactured by Kyowa Interface Science Co., Ltd.). The film was cut into a square of 10 cm, and the arithmetic mean value of the contact angles at five points in the same sample was defined as the water contact angle (°).

[Presence or Absence of Boron Element]

The presence or absence of the boron element on the film surface of each example was confirmed by element analysis by ICP emission analysis.

[Content of Boron Element]

The film of each example was cut into a size of 20 mm × 20 mm with a cutter to obtain a sample. The sample represents a shape close to a square having one side of 20 mm. 5 g of the obtained sample was added to a hydrogen fluoride solution, and then the sample was dissolved under sealed conditions using a microwave wet digestion method to obtain a measurement solution.

The obtained measurement solution was adjusted to a constant volume and appropriately diluted, and then subjected to a quantitative analysis of the content (ppm) of the boron element in the film by ICP-AES: 720-ES (manufactured by Agilent Technologies, Inc.).

A calibration curve for boron was created, and the content (ppm) of the boron element in the film was determined

by an external standard method.

[Restoring Force]

A method of measuring the restoring force will be described with reference to FIGS. 1 and 2.

The film of each example was cut out from the center portion of the film in the width direction into a strip shape having a width of 1 cm and a length of 12 cm to obtain a test piece (101). One end (a) of the test piece (101) was fixed to a resin cylinder (material: ABS) (102) having an outer diameter of 10 cm with an adhesive tape (not shown), and the test piece (101) was wound around the resin cylinder (102). The resin cylinder (102) was fixed on a jack (105) whose height could be adjusted and was not rotated. Next, a rectangular plate (103) (material: stainless steel, weight: 7.3 g) having a width of 1 cm, a length of 15 cm, and a thickness of 0.1 cm was installed horizontally such that it contacts one end (b) of the test piece (101) on the side opposite to the one end (a). One end (c) of the plate (103) was overlapped by 1 cm in the length direction with the end portion of the test piece (101) on the one end (b) side, and one end (d) of the plate (103) opposite to the one end (c) was installed to be in contact with the upper side of the measurement axis of the digital force gauge (104) (manufactured by Nidec-Shimpo Corporation, product name: FGP-0.2). The plate (103) was fixed by using a stand, a clamp, and clay (not shown) at a portion of 7.5 cm from the one end (d), and was installed to be movable with a point fixed by the clay as a fulcrum. This state is defined as a start of the test, and is shown in FIG. 1. Next, as indicated by an arrow in FIG. 1, the jack (105) was moved to raise the height of the resin cylinder (102), so that the test piece (101) was raised along the lower side of the plate (103), the plate (103) and the tangent of the outer circumference of the resin cylinder (102) overlapped each other, and the value G (g) of the digital force gauge (104) was read when a portion of 1 cm where the plate (103) and the test piece (101) overlapped each other was completely adhered (this state is shown in FIG. 2).

The above-described "portion of 1 cm where the plate (103) and the test piece (101) overlap each other is completely adhered" means that, as shown in FIG. 2, the test piece (101) is pushed up from below the plate (103), and a portion having a length of 1 cm and a width of 1 cm from one end (c) of the plate (103) and a portion having a length of 1 cm and a width of 1 cm from one end (b) of the test piece (101) are in close contact with each other without a gap in the entire surface.

According to Equation (1), the restoring force (N/m) per 1 m of the width of the test piece (101) was calculated.

$$\text{Restoring force (N/m)} = (G\ (g) \times 9.80665/1000) \times 100 \qquad \text{Equation (1):}$$

In addition, the restoring force (N/m) per 1 m of the width and 300 μm of the thickness of the test piece (101) was calculated according to the following Equation (2).

$$\text{Restoring force (N/m)} = (G\ (g) \times 9.80665/1000 \times 100)/\text{thickness } (\mu m) \text{ of test piece} \times 300\ (\mu m) \qquad \text{Equation (2):}$$

9.80665 in Equations (1) and (2) represents gravitational acceleration ($m/s^2$).

[Winding Properties Evaluation (1)]

The film having a width of 5 cm and a length of 30 cm of each example was wound around a core (referred to as a large core) having an outer diameter of 7.62 cm and a width of 20 cm (material: ABS) and a core (referred to as a small core) having an outer diameter of 4 cm and a width of 20 cm (material: ABS) in a roll shape under the condition of a winding speed of 100 cm/min, and an end portion of the wound film was fixed with an adhesive tape (Scotch tape manufactured by 3M) having a width of 18 mm and a length of 3 cm, and then allowed to stand for 30 minutes, and then the presence or absence of rewinding of the film was confirmed.

The rewinding of the film indicates that the adhesive tape is detached or the portion fixed by the adhesive tape is shifted.

The roll after the winding was observed, and the winding property was evaluated according to the following criteria. A and B were accepted.

(Criteria)

A (best): There was no rewinding in both the large core and the small core.
B (good): There was rewinding in any one of the large core or the small core.
C (defective): There was rewinding in both the large core and the small core.

[Winding Properties Evaluation (2)]

For the thiourethane film of each example, the winding property was evaluated based on the obtained restoring force (N/m) per 1 m of the width according to the following criteria.

A (best): The restoring force per 1 m of width is less than 1.0 N/m (the film can be easily wound up, and there is no rewinding)
B (good): The restoring force per 1 m of width is 1.0 N/m or more and less than 30 N/m (windable)
C (defective): The restoring force per 1 m of width is 30 N/m or more (winding is difficult)

[Table 1]

Table 1

| | | | Unit | Example 1a | Example 2a | Example 3a | Example 4a | Example 5a | Example 6a | Comparative Example 1a | Comparative Example 2a |
|---|---|---|---|---|---|---|---|---|---|---|---|
| Photopolymerizable composition blending | Bifunctional polythiol | Polythiol 1 | Parts by mass | - | - | 37.4 | - | - | 16.4 | - | - |
| | Trifunctional or higher polythiol | Polythiol 2 | Parts by mass | 84.2 | - | 42.1 | 92.3 | - | 73.8 | - | - |
| | | Polythiol 3 | Parts by mass | - | 118 | - | - | 130 | - | - | 118 |
| | Isocyanate compound | Isocyanate compound 1 | Parts by mass | 100 | 100 | 100 | - | - | - | - | 100 |
| | | Isocyanate compound 2 | Parts by mass | - | - | - | 100 | 100 | 100 | - | - |
| | Base generator | Base generator 1 | ppm by mass | 3000 | 3000 | 3000 | 3000 | 3000 | 3000 | - | 3000 |
| | Other components | Release agent 1 | ppm | 3000 | 3000 | 3000 | 3000 | 3000 | 3000 | - | 3000 |
| Thiol equivalent of bifunctional polythiol/ (thiol equivalent of bifunctional polythiol + trifunctional or higher polythiol) | | | % | 0 | 0 | 50 | 0 | 0 | 20 | - | 0 |
| Production condition of thiourethane film | Thickness of photopolymerizable composition | | μm | 350 | 350 | 350 | 350 | 350 | 350 | - | 700 |
| | JVA irradiation condition | Irradiation intensity | mW | 200 | 200 | 200 | 200 | 200 | 200 | - | 200 |
| | | Integrated light amount | mJ | 6000 | 6000 | 6000 | 6000 | 6000 | 6000 | - | 6000 |
| | UVC irradiation condition | Irradiation intensity | mW | 70 | 70 | 70 | 70 | 70 | 70 | - | 70 |
| | | Integrated light amount | mJ | 2100 | 2100 | 2100 | 2100 | 2100 | 2100 | - | 2100 |
| | Heating temperature | | | 120°C | 120°C | 120°C | 120°C | 120°C | 120°C | - | 120°C |
| | Heating time | | | 2 h | 2 h | 2 h | 2 h | 2 h | 2 h | - | 2 h |

(continued)

| | | Unit | Example 1a | Example 2a | Example 3a | Example 4a | Example 5a | Example 6a | Comparative Example 1a | Comparative Example 2a |
|---|---|---|---|---|---|---|---|---|---|---|
| Presence or absence of boron element on surface of thiourethane film | | | Present | Present | Present | Present | Present | Present | Absent | Present |
| Content of boron element in thiourethane film | | ppm | 47 | 47 | 47 | 47 | 47 | 47 | - | 47 |
| Evaluation | Thickness T | μm | 337 | 400 | 350 | 356 | 343 | 341 | 519 | 645 |
| | Water contact angle | ○ | 80.2 | 72.2 | 70.8 | 65.0 | 63.1 | 68.6 | 76.6 | 72.2 |
| | Tg | °C | 113 | 103 | 100 | 84 | 85 | 74 | - | 103 |
| | Storage elastic modulus E' at 40°C | MPa | 2900 | 2942 | 2498 | 3152 | 3203 | 2807 | 3916 | 2942 |
| | Storage elastic modulus E' at 40°C x thickness T | MPa·mm | 977 | 1177 | 874 | 1122 | 1099 | 957 | 2032 | 1898 |
| | Restoring force of film per width of 1 m | N/m | 8.63 | 12.45 | 7.75 | 8.92 | 8.73 | 8.43 | 35.50 | 49.82 |
| | Restoring force of film per width of 1 m and thickness of 300 μm | N/m | 7.68 | 9.34 | 6.64 | 7.52 | 7.64 | 7.42 | 20.52 | 23.17 |
| | Winding property evaluation (1) | | A | B | A | A | A | A | C | C |
| | Winding property evaluation (2) | | B | B | B | B | B | B | C | C |

<Examples 1b to 6b and Comparative Example 1b>

(Raw Material)

- Polythiol 1: bis(2-mercaptoethyl)sulfide
- Polythiol 2: 4-mercaptomethyl-1,8-dimercapto-3,6-dithiaoctane
- Isocyanate compound 1: mixture of 2,5-bis(isocyanatomethyl)bicyclo-[2.2.1]-heptane and 2,6-bis(isocyanatomethyl)bicyclo-[2.2.1]-heptane
- Base generator 1: tetra(n-butyl)ammonium=n-butyltri(1-naphthyl)borate, manufactured by RESONAC Corporation, Karenz (registered trademark) N3B, compound represented by Formula (X)

[chem. 7]

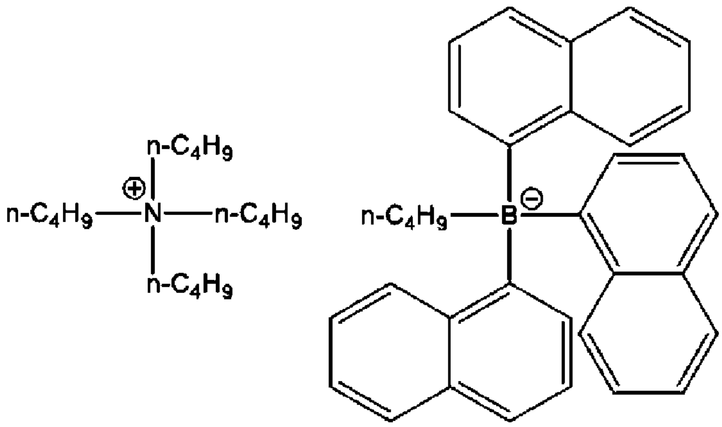

· · · (X)

- Release agent 2: polyether-modified silicone (KF-351A, manufactured by Shin-Etsu Silicone Co., Ltd.)

(Example 1b)

A thiourethane flat plate and a thiourethane film were produced as follows.

A mixed solution was prepared by mixing 100 parts by mass of a mixture of 2,5-bis(isocyanatomethyl) bicyclo-[2.2.1]-heptane and 2,6-bis(isocyanatomethyl)bicyclo-[2.2.1]-heptane, 42.1 parts by mass of 4-mercaptomethyl-1,8-dimercapto-3,6-dithiaoctane, 37.4 parts by mass of bis(2-mercaptoethyl)sulfide, 750 ppm of a base generator 1, and 2000 ppm of a release agent 2 which are incorporated to the total of the polythiol compound (A) and the isocyanate compound (B). This mixed solution was stirred at 25°C for 10 minutes to be completely dissolved, and then defoamed at 600 Pa for 1 hour, and filtered through a 1 μm PTFE filter to obtain a prepared solution (photopolymerizable composition).

The thiourethane flat plate was produced as follows.

Two glass molds having a diameter of 7.7 cm and a plate thickness of 5 mm were fixed with tape so that the interval was 2 mm, thereby producing a casting mold. The obtained casting mold was filled with the obtained prepared solution, and the prepared solution was irradiated with ultraviolet rays at an irradiation intensity of 186 mW and an integrated light amount of 1488 mJ for UVA and an irradiation intensity of 32.5 mW and an integrated light amount of 260 mJ for UVC, thereby obtaining a semi-cured product sandwiched between glass plates. The obtained semi-cured product was heated at 120°C for 3 hours and then released from the glass mold to obtain a thiourethane flat plate having a thickness of 2 mm.

A thiourethane film was produced as follows.

Two glass plates having one side of 15 cm and a plate thickness of 2 mm were disposed at an interval of 200 μm, a PTFE sheet having a thickness of 200 μm, which was processed to surround the four sides of the glass plate with a width of 1 cm, was installed, the obtained prepared solution was injected, the pair of glass plates were sandwiched and fixed with clips, and the ultraviolet irradiation was performed at an irradiation intensity of 186 mW and an integrated light amount of 1488 mJ for UVA and an irradiation intensity of 32.5 mW and an integrated light amount of 260 mJ for UVC, thereby obtaining a semi-cured product sandwiched between the glass plates. The obtained semi-cured product was heated at 120°C for 3 hours and then released from the glass mold to obtain a thiourethane film having a thickness of 220 μm.

(Examples 2b to 6b and Comparative Example 1b)

A thiourethane flat plate and a thiourethane film of each example were obtained in the same manner as in Example 1b, except that the formulation and the production conditions were as described in Table 2.
For the thiourethane flat plate of each example, the degree of polymerization, the content of boron element, the thickness of the flat plate, the haze, the yellowness (YI value), and the Young's modulus were measured as follows. In addition, for the thiourethane film of each example, the film thickness T, the restoring force, and the storage elastic modulus E' were measured as follows. In addition, for the thiourethane film, E' × T was calculated from the results of the storage elastic modulus E' and the thickness T. In addition, the winding properties (1) evaluation, the winding properties (2) evaluation, the appearance evaluation, and the hue evaluation were performed. The results are shown in Table 2.

[Degree of Polymerization]

The degree of polymerization (%) of the thiourethane flat plate of each example was measured using FT-IR (ATR method).
For the thiourethane flat plate of each example, the absorbance of a peak at 2254 $cm^{-1}$ derived from an isocyanato group was measured by FT-IR (ATR method). The absorbance measured for the unpolymerized monomer solution was used as a reference of a degree of polymerization of 0%, and the degree of polymerization was calculated according to the following Equation (4).

Degree of polymerization (%) = (absorbance of unpolymerized monomer - absorbance of each thiourethane flat plate)/absorbance of unpolymerized monomer × 100 Equation (4):

The absorbance in Equation (4) is the absorbance at a peak of 2254 $cm^{-1}$.

[Content of Boron Element in Thiourethane Flat Plate]

The thiourethane flat plate of each example was cut into a size of 20 mm × 20 mm with a cutter and used as a sample. The sample represents a shape close to a square having one side of 20 mm. 5 g of the obtained sample was added to a hydrogen fluoride solution, and then the sample was dissolved under sealed conditions using a microwave wet digestion method to obtain a measurement solution.
The obtained measurement solution was adjusted to a constant volume and appropriately diluted, and then the content (ppm) of the boron element in the thiourethane flat plate was subjected to a quantitative analysis by ICP-AES: 720-ES (manufactured by Agilent Technologies, Inc.).
A calibration curve for boron was created, and the content (ppm) of the boron element was determined by an external standard method.
Although Comparative Example 1b was uncured, the boron element content was measured by the above-described method.

[Thicknesses of Flat Plate and Film]

The thicknesses T of the flat plate and the film of each example were measured at ten arbitrary locations on each flat plate and each film using a digimatic indicator (ID-H0560, manufactured by Mitutoyo Corporation), and the average values thereof were adopted.

[Haze]

For the thiourethane flat plate of each example, haze (%) was measured using HazeMeter NDH2000 (manufactured by Nippon Denshoku Industries Co., Ltd.) in accordance with JIS K 7136:2000 (ISO 14782:1999).

[Yellowness (YI value)]

For the thiourethane flat plate of each example, the yellowness (YI value) was measured in accordance with JIS K 7373: 2006 using a spectrophotometer CM-5 (manufactured by Konica Minolta, Inc.).

[Young's Modulus]

For a test piece obtained by cutting the thiourethane flat plate of each example into a length of 65 mm × a width of 25 mm, the Young's modulus was measured under conditions of a measurement temperature: 23°C, a measurement humidity: 50% RH, a tensile speed: 1 mm/min, and a distance between fulcrums: 34 mm using a tensile tester (AUTOGRAPH AGS-X (5 kN), manufactured by Shimadzu Corporation) in accordance with JIS K7171: 2016.

[Restoring Force]

A method of measuring the restoring force will be described with reference to FIGS. 1 and 2.

The film of each example was cut out from the center portion of the film in the width direction into a strip shape having a width of 1 cm and a length of 12 cm to obtain a test piece (101). One end (a) of the test piece (101) was fixed to a resin cylinder (material: ABS) (102) having an outer diameter of 10 cm with an adhesive tape (not shown), and the test piece (101) was wound around the resin cylinder (102). The resin cylinder (102) was fixed on a jack (105) whose height could be adjusted and was not rotated. Next, a rectangular plate (103) (material: stainless steel, weight: 7.3 g) having a width of 1 cm, a length of 15 cm, and a thickness of 0.1 cm was installed horizontally such that it contacts one end (b) of the test piece (101) on the side opposite to the one end (a). One end (c) of the plate (103) was overlapped by 1 cm in the length direction with the end portion of the test piece (101) on the one end (b) side, and one end (d) of the plate (103) opposite to the one end (c) was installed to be in contact with the upper side of the measurement axis of the digital force gauge (104) (manufactured by Nidec-Shimpo Corporation, product name: FGP-0.2). The plate (103) was fixed by using a stand, a clamp, and clay (not shown) at a portion of 7.5 cm from the one end (d), and was installed to be movable with a point fixed by the clay as a fulcrum. This state is defined as a start of the test, and is shown in FIG. 1. Next, as indicated by an arrow in FIG. 1, the jack (105) was moved to raise the height of the resin cylinder (102), so that the test piece (101) was raised along the lower side of the plate (103), the plate (103) and the tangent of the outer circumference of the resin cylinder (102) overlapped each other, and the value G (g) of the digital force gauge (104) was read when a portion of 1 cm where the plate (103) and the test piece (101) overlapped each other was completely adhered (this state is shown in FIG. 2).

The above-described "portion of 1 cm where the plate (103) and the test piece (101) overlap each other is completely adhered" means that, as shown in FIG. 2, the test piece (101) is pushed up from below the plate (103), and a portion having a length of 1 cm and a width of 1 cm from one end (c) of the plate (103) and a portion having a length of 1 cm and a width of 1 cm from one end (b) of the test piece (101) are in close contact with each other without a gap in the entire surface.

According to Equation (2), a restoring force (N/m) per 1 m of the width of the test piece (101) was calculated.

$$\text{Restoring force (N/m)} = G\ (g) \times 9.80665/1000 \times 100 \qquad \text{Equation (2):}$$

In addition, the restoring force (N/m) per 1 m of the width and 300 μm of the thickness of the test piece (101) was calculated according to Equation (3).

$$\text{Restoring force (N/m)} = (G\ (g) \times 9.80665/1000 \times 100)/\text{thickness } (\mu m) \text{ of test piece} \times 300\ (\mu m) \qquad \text{Equation (3):}$$

9.80665 in Equations (2) and (3) represents gravitational acceleration ($m/s^2$).

[Storage Elastic Modulus E']

A test piece having a width of 5 mm and a length of 30 mm was cut out from the film of each example under the following conditions, and the solid viscoelasticity temperature dispersion measurement was performed to measure the storage elastic modulus E' (MPa) at 40°C.

Device: dynamic viscoelasticity measuring device RSA-III (manufactured by TA Instruments)
Deformation mode: tensile
Temperature rise rate: 2 °C/min
Frequency: 1 Hz
Setting strain: 0.1%
Environment: under air atmosphere

[Winding Properties Evaluation (1)]

A film having a size of a width of 5 cm and a length of 30 cm was cut out from the film of each example, and wound around a core (referred to as a large core) having an outer diameter of 7.62 cm and a width of 20 cm (material: ABS) and a core (referred to as a small core) having an outer diameter of 4 cm and a width of 20 cm (material: ABS) in a roll shape under a condition of a winding speed of 100 cm/min, the end portion of the wound film was fixed with an adhesive tape (Scotch tape manufactured by 3M Company) having a width of 18 mm and a length of 3 cm, and after standing for 30 minutes, the presence or absence of rewinding of the film was confirmed.
The rewinding of the film indicates that the adhesive tape is detached or the portion fixed by the adhesive tape is shifted.
The roll after the winding was observed, and the winding property was evaluated according to the following criteria. A and B were accepted.

(Criteria)

A (best): There was no rewinding in both the large core and the small core.
B (good): There was rewinding in any one of the large core or the small core.
C (defective): There was rewinding in both the large core and the small core.

[Winding Properties Evaluation (2)]

For the thiourethane film of each example, the winding property was evaluated based on the obtained restoring force (N/m) per 1 m of the width according to the following criteria.

A (best): The restoring force per 1 m of width is less than 1.0 N/m (the film can be easily wound up, and there is no rewinding)
B (good): The restoring force per 1 m of width is 1.0 N/m or more and less than 30 N/m (windable)
C (defective): The restoring force per 1 m of width is 30 N/m or more (winding is difficult)

[Appearance Evaluation (Presence or Absence of Foaming)]

The appearance (presence or absence of foaming) of the thiourethane film of each example was visually evaluated based on the following criteria.

A (best): no foaming
B (good): foaming was observed in a part
C (defective): foaming was observed in the entire film

[Hue Evaluation]

For the thiourethane film of each example, the hue was evaluated based on the obtained yellowness (YI value) according to the following criteria.

A (best): YI value is less than 2.0
B (good): YI value is 2.0 or more and less than 3.0
C (defective): YI value is 3.0 or more

[Table 2]

Table 2

| | | | Unit | Example 1b | Example 2b | Example 3b | Example 4b | Example 5b | Example 6b | Comparative Example 1b |
|---|---|---|---|---|---|---|---|---|---|---|
| Photopolymerizable composition blending | Bifunctional polythiol | Polythiol 1 | Parts by mass | 37.4 | 37.4 | 37.4 | 37.4 | 37.4 | 37.4 | 37.4 |
| | Trifunctional or higher polythiol | Polythiol 2 | Parts by mass | 42.1 | 42.1 | 42.1 | 42.1 | 42.1 | 42.1 | 42.1 |
| | Isocyanate compound | Isocyanate compound 1 | Parts by mass | 100 | 100 | 100 | 100 | 100 | 100 | 100 |
| | Base generator | Base generator 1 | ppm by mass | 750 | 1250 | 1500 | 2000 | 5000 | 10000 | 200 |
| | Other components | Release agent 2 | ppm | 2000 | 2000 | 2000 | 2000 | 2000 | 2000 | 2000 |
| Thiol equivalent of bifunctional polythiol/ (thiol equivalent of bifunctional polythiol + trifunctional or higher polythiol) | | | % | 47.0% | 47.0% | 47.0% | 47.0% | 47.0% | 47.0% | 47.0% |
| Equivalent ratio of thiol group in bifunctional or higher polythiol (A) to isocyanato group in isocyanate compound (B) (thiol group/ isocyanato group) | | | | 1.0 | 1.0 | 1.0 | 1.0 | 1.0 | 1.0 | 1.0 |
| Production condition of thiourethane film | Thickness of photopolymerizable composition | | mm | 2 | 2 | 2 | 2 | 2 | 2 | 2 |
| | UVA irradiation condition | Irradiation intensity | mW | 186 | 186 | 186 | 186 | 186 | 186 | 186 |
| | | Integrated light amount | mJ | 1488 | 1488 | 1488 | 1488 | 1488 | 1488 | 1488 |
| | JVC irradiation condition | Irradiation intensity | mW | 32.5 | 32.5 | 32.5 | 32.5 | 32.5 | 32.5 | 32.5 |
| | | Integrated light amount | mJ | 260 | 260 | 260 | 260 | 260 | 260 | 260 |
| | Heating temperature | | °C | 120 | 120 | 120 | 120 | 120 | 120 | 120 |
| | Heating time | | h | 3 | 3 | 3 | 3 | 3 | 3 | 3 |
| Degree of polymerization | | | % | 65.5 | 80.6 | 84.7 | 86.4 | 95.3 | 100 | Uncured |
| Content of boron element in thiourethane flat plate | | | ppm | 12 | 20 | 23 | 31 | 78 | 156 | 3 |

(continued)

| | | Unit | Example 1b | Example 2b | Example 3b | Example 4b | Example 5b | Example 6b | Comparative Example 1b |
|---|---|---|---|---|---|---|---|---|---|
| Evaluation | Thickness of flat plate | mm | 2 | 2 | 2 | 2 | 2 | 2 | - |
| | Haze | % | 35.21 | 0.93 | 0.55 | 0.57 | 0.54 | 0.72 | - |
| | Y1 | | -0.55 | 0.43 | 1.27 | 1.87 | 2.73 | 3.17 | - |
| | Young's modulus | MP | 3826 | 2492 | 2214 | 965 | 772 | 776 | - |
| | Film thickness T | μm | 220 | 215 | 220 | 190 | 250 | 205 | - |
| | Restoring force per width of 1 m | N/m | 1.7 | 0.9 | 0.5 | 0.5 | 0.9 | 0.7 | - |
| | Restoring force per width of 1 m and thickness of 300 μm | N/m | 2.2 | 1.2 | 0.6 | 0.7 | 1.0 | 1.0 | - |
| | Storage elastic modulus E' at 40°C | MPa | 3550 | 5110 | 5330 | 5650 | 6250 | 5005 | - |
| | Storage elastic modulus E' at 40°C x thickness T | MPa·mm | 781 | 1099 | 1173 | 1074 | 1563 | 1026 | - |
| | Winding property evaluation (1) | | B | B | A | A | B | B | - |
| | Winding property evaluation (2) | | B | A | A | A | A | A | - |
| | Appearance evaluation during film formation (presence or absence of foamina) | | C | B | A | A | A | A | - |
| | Hue evaluation | | A | A | A | A | B | C | - |

<Examples 1c to 6c>

(Raw Material)

· Polythiol 1: bis(2-mercaptoethyl)sulfide
· Polythiol 2: 4-mercaptomethyl-1,8-dimercapto-3,6-dithiaoctane
· Isocyanate compound 1: mixture of 2,5-bis(isocyanatomethyl)bicyclo-[2.2.1]-heptane and 2,6-bis(isocyanatomethyl)bicyclo-[2.2.1]-heptane
· Isocyanate compound 2: xylylene diisocyanate
· Base generator 1: tetra(n-butyl)ammonium=n-butyltri(1-naphthyl)borate
· Metal catalyst 1: dimethyltin dichloride · Release agent 1: polyether-modified silicone (DOWSIL SH-3749, manufactured by Dow·Toray Industries, Inc.)
· Release agent 2: polyether-modified silicone (KF-351A, manufactured by Shin-Etsu Chemical Co., Ltd.)
· Release agent 3: phosphoric acid ester (Zelec (registered trademark) UN, manufactured by Stepan Company)

(Example 1c)

[Preparation of Photopolymerizable Composition]

0.006 parts by mass of dimethyltin dichloride, 100 parts by mass of a mixture of 2,5-bis(isocyanatomethyl) bicyclo-[2.2.1]-heptane and 2,6-bis(isocyanatomethyl) bicyclo-[2.2.1]-heptane, 27.7 parts by mass of 4-mercaptomethyl-1,8-dimercapto-3,6-dithiaoctane, 57.5 parts by mass of bis(2-mercaptoethyl)sulfide, and 0.19 parts by mass of a release agent were incorporated and mixed to prepare a mixed solution. The obtained mixed solution was stirred at 25°C for 10 minutes to be completely dissolved, defoamed at 600 Pa for 1 hour, and filtered through a 1 μm PTFE filter, thereby obtaining a mixed solution A. The obtained mixed solution A was heated at 80°C for 4.5 hours to obtain a prepolymerizable polymerizable composition having a viscosity of 182 mPa·s.

A solution (mixed solution B) obtained by dissolving 0.49 parts by mass of the base generator 1 in 9.3 parts by mass of a mixture of 2,5-bis(isocyanatomethyl)bicyclo-[2.2.1]-heptane and 2,6-bis(isocyanatomethyl)bicyclo-[2.2.1]-heptane was added to the obtained prepolymerizable polymerizable composition to obtain a prepared solution (photopolymerizable composition).

[Laminate Production Step]

The obtained prepared solution was applied to a release film cut into a size of 9 × 9 cm to a thickness of 300 μm using a bar coater.

[First Polymerization Step]

The prepared solution applied on the release film was irradiated with ultraviolet rays at an irradiation intensity of 200 mW and an irradiation amount of 1000 mJ for UVA and an irradiation intensity of 70 mW and an irradiation amount of 360 mJ for UVC to polymerize the vicinity of the surface of the prepared solution, thereby obtaining a semi-cured product.

[Second Polymerization Step]

A 125 μm-thick polyethylene terephthalate (PET) film was laminated as a protective film on the surface on the obtained semi-cured product layer side on the release film, heated at 120°C for 1 hour, and then the release film and the protective film were peeled off to obtain a thiourethane film having a size of about 9 cm × 9 cm.

[Evaluation of Production Efficiency]

The production efficiency was evaluated based on the following criteria, from the time required to obtain a thiourethane film having a size of 8 cm × 8 cm, that is, from the start time of the preparation of the mixed solution in [Preparation of Photopolymerizable Composition] to the time when the release film and the protective film were peeled off from the thiourethane film in [Second Polymerization Step].

A (best): within 7 hours

B (good): more than 7 hours and within 10 hours
C (defective): more than 10 hours

[Evaluation of Contraction Marks]

The appearance evaluation of the contraction mark of the obtained surface of the thiourethane film was performed by visual observation according to the following criteria.

A (best): There was no contraction mark at all.
B (good): Slight contraction marks were observed at the peripheral portion of the film.
C (defective): Large contraction marks were observed from the peripheral portion of the film to the center.

[Appearance Evaluation during Heating for 15 Minutes at 145°C]

The obtained thiourethane film was heated at 145°C for 15 minutes, and the presence or absence of air bubbles on the film surface was visually evaluated according to the following criteria. A and B were accepted.

A (best): no air bubbles were generated
B (good): air bubbles were slightly generated.
C (defective): many air bubbles were generated

(Examples 2c to 6c)

A thiourethane film was obtained in the same manner as in Example 1c, except that the formulation and the conditions shown in Table 3 were adopted.
In Example 3c, the bar coater was set to have a thickness of 300 μm in the laminate production step, but the thickness was in a range of 50 to 150 μm due to the low viscosity.
The following evaluations were performed using the obtained thiourethane film in each example.

[Evaluation Methods]

In the present example, each film and lens was evaluated as follows.

[Viscosity]

The viscosity (mPa·s) of the mixed solution A was measured at 23°C using a vibration type viscometer VM-10A-M manufactured by Sekonic Co., Ltd.

[Thickness Measurement]

The thickness T of each obtained thiourethane film was measured at ten arbitrary locations on each film using a digimatic indicator (ID-H0560, manufactured by Mitutoyo Corporation), and the average value thereof was adopted.

[Water Contact Angle of Substrate]

In accordance with JIS R3257: 1999, the water contact angle of the release film was measured at 23°C and 50% RH using a contact angle meter (DMs-401 type, manufactured by Kyowa Interface Science Co., Ltd.). The substrate was cut into a square of 10 cm, and the arithmetic mean value of the contact angles at five points in the same sample was defined as the water contact angle (°).

[Contact Angle of Substrate with respect to Mixed Solution A]

The contact angle with respect to the mixed solution A obtained in Examples 1c, 2c, and 6c was measured. The substrate was cut into a square of 9 cm, and the arithmetic mean value of the contact angles measured at five points in the same sample in accordance with JIS R 3257: 1999 was defined as the contact angle (°) with respect to the mixed solution A.

[Content of Boron Element in Film]

The film of each example was cut into a size of 20 mm × 20 mm with a cutter to obtain a sample. The sample represents a shape close to a square having one side of 20 mm. 5 g of the obtained sample was added to a hydrogen fluoride solution, and then the sample was dissolved under sealed conditions using a microwave wet digestion method to obtain a measurement solution.

The obtained measurement solution was adjusted to a constant volume and appropriately diluted, and then subjected to a quantitative analysis of the content (ppm) of the boron element in the film by ICP-AES: 720-ES (manufactured by Agilent Technologies, Inc.).

A calibration curve for boron was created, and the content (ppm) of the boron element in the film was determined by an external standard method.

[Storage Elastic Modulus E']

A test piece having a width of 5 mm and a length of 30 mm was cut out from the film of each example under the following conditions, and the solid viscoelasticity temperature dispersion measurement was performed to measure the storage elastic modulus E' (MPa) at 40°C.

Device: dynamic viscoelasticity measuring device RSA-III (manufactured by TA Instruments)
Deformation mode: tensile
Temperature rise rate: 2 °C/min
Frequency: 1 Hz
Setting strain: 0.1%
Environment: under air atmosphere

In addition, E' × T was calculated from the results of the storage elastic modulus E' and the thickness T.

[Restoring Force]

A method of measuring the restoring force will be described with reference to FIGS. 1 and 2.

The film of each example was cut out from the center portion of the film in the width direction into a strip shape having a width of 1 cm and a length of 12 cm to obtain a test piece (101). One end (a) of the test piece (101) was fixed to a resin cylinder (material: ABS) (102) having an outer diameter of 10 cm with an adhesive tape (not shown), and the test piece (101) was wound around the resin cylinder (102). The resin cylinder (102) was fixed on a jack (105) whose height could be adjusted and was not rotated. Next, a rectangular plate (103) (material: stainless steel, weight: 7.3 g) having a width of 1 cm, a length of 15 cm, and a thickness of 0.1 cm was installed horizontally such that it contacts one end (b) of the test piece (101) on the side opposite to the one end (a). One end (c) of the plate (103) was overlapped by 1 cm in the length direction with the end portion of the test piece (101) on the one end (b) side, and one end (d) of the plate (103) opposite to the one end (c) was installed to be in contact with the upper side of the measurement axis of the digital force gauge (104) (manufactured by Nidec-Shimpo Corporation, product name: FGP-0.2). The plate (103) was fixed by using a stand, a clamp, and clay (not shown) at a portion of 7.5 cm from the one end (d), and was installed to be movable with a point fixed by the clay as a fulcrum. This state is defined as a start of the test, and is shown in FIG. 1. Next, as indicated by an arrow in FIG. 1, the jack (105) was moved to raise the height of the resin cylinder (102), so that the test piece (101) was raised along the lower side of the plate (103), the plate (103) and the tangent of the outer circumference of the resin cylinder (102) overlapped each other, and the value G (g) of the digital force gauge (104) was read when a portion of 1 cm where the plate (103) and the test piece (101) overlapped each other was completely adhered (this state is shown in FIG. 2).

The above-described "portion of 1 cm where the plate (103) and the test piece (101) overlap each other is completely adhered" means that, as shown in FIG. 2, the test piece (101) is pushed up from below the plate (103), and a portion having a length of 1 cm and a width of 1 cm from one end (c) of the plate (103) and a portion having a length of 1 cm and a width of 1 cm from one end (b) of the test piece (101) are in close contact with each other without a gap in the entire surface.

According to Equation (2), a restoring force (N/m) per 1 m of the width of the test piece (101) was calculated.

Restoring force (N/m) = G (g) × 9.80665/1000 × 100 Equation (2):

[Winding Properties Evaluation (1)]

A film having a size of a width of 5 cm and a length of 30 cm was cut out from the thiourethane film of each example,

and wound around a core (referred to as a large core) having an outer diameter of 7.62 cm and a width of 20 cm (material: ABS) and a core (referred to as a small core) having an outer diameter of 4 cm and a width of 20 cm (material: ABS) in a roll shape under a condition of a winding speed of 100 cm/min, the end portion of the wound film was fixed with an adhesive tape (Scotch tape manufactured by 3M) having a width of 18 mm and a length of 3 cm, and after standing for 30 minutes, the presence or absence of rewinding of the film was confirmed.

The rewinding of the film indicates that the adhesive tape is detached or the portion fixed by the adhesive tape is shifted.

The roll after the winding was observed, and the winding property was evaluated according to the following criteria. A and B were accepted.

(Criteria)

A (best): There was no rewinding in both the large core and the small core.
B (good): There was rewinding in any one of the large core or the small core.
C (defective): There was rewinding in both the large core and the small core.

[Winding Properties Evaluation (2)]

For the thiourethane film of each example, the winding property was evaluated based on the obtained restoring force (N/m) per 1 m of the width according to the following criteria.

A (best): The restoring force per 1 m of width is less than 1.0 N/m (the film can be easily wound up, and there is no rewinding)
B (good): The restoring force per 1 m of width is 1.0 N/m or more and less than 30 N/m (windable)
C (defective): The restoring force per 1 m of width is 30 N/m or more (winding is difficult)

[Table 3]

Table 3

| | | | Unit | Example 1c | Example 2c | Example 3c | Example 4c | Example 5c | Example 6c |
|---|---|---|---|---|---|---|---|---|---|
| Photopolymerizable composition blending | Bifunctional polythiol | Polythiol 1 | Parts by mass | 52 | 52 | 52 | 52 | 52 | 16 |
| | Trifunctional or higher polythiol | Polythiol 2 | Parts by mass | 25 | 25 | 25 | 25 | 25 | 74 |
| | Isocyanate compound | Isocyanate compound 1 | Parts by mass | 100 | 100 | 100 | 100 | 100 | |
| | | Isocyanate compound 2 | Parts by mass | | | | | | 100 |
| | Metal catalyst | Metal catalyst 1 | ppm | 30 | 30 | 20 | 50 | 30 | 1 |
| | Other components | Release agent 1 | ppm | 1000 | | 1000 | 1000 | 1000 | |
| | | Release agent 2 | ppm | | 250 | | | | 500 |
| | | Release agent 3 | ppm | | | | | | |
| Thiol equivalent of bifunctional polythiol/ (thiol equivalent of bifunctional polythiol + trifunctional or higher polythiol) | | | % | 70 | 70 | 70 | 70 | 70 | 20 |
| Heating condition in viscosity adjustment step | | Temperature | | 80°C | 80°C | 80°C | 80°C | 80°C | 80°C |
| | | Time | | 4.5 h | 4.5 h | 4.5 h | 2.5 h | 4.5 h | 3.75 h |
| Viscosity of mixed solution A after viscosity adjustment | | Viscosity | mPa·s | 182 | 182 | 137 | 450 | 182 | 219 |

(continued)

| | | | Unit | Example 1c | Example 2c | Example 3c | Example 4c | Example 5c | Example 6c |
|---|---|---|---|---|---|---|---|---|---|
| Laminate production step | Base generator | Base generator 1 | ppm by mass | 2500 | 2500 | 2500 | 2500 | *2500* | *2500* |
| | Release film | Material | | PET | Non-silicone release Treatment/PET | PET | PET | PET | Non-silicone release Treatment/PET |
| | | Thickness | µm | 250 | 40 | 250 | 250 | 250 | 188 |
| | | Water contact angle | ○ | 71.1 | 70.7 | 71.1 | 71.1 | 71.1 | 70.7 |
| | | Contact angle with respect tc mixed solution A | ○ | 16.0 | 26.0 | 16.0 | 16.0 | 16.0 | 18.6 |
| | Coating condition | Thickness of photopolymerizable composition | µm | 300 | 300 | 50 to 150 (set value of 300) | 300 | 300 | 300 |
| First polymerization step | UVA | Irradiation intensity | mW | 200 | 200 | 200 | 200 | 200 | 200 |
| | | intearated light amount | mJ | 1000 | 1000 | 1000 | 1000 | 1000 | 1400 |
| | UVC | Irradiation intensity | mW | 70 | 70 | 70 | 70 | 70 | 70 |
| | | Integrated light amount | mJ | 360 | 360 | 360 | 360 | 360 | 504 |
| Second polymerization step | Temperature | | | 120°C | 120°C | 120°C | 120°C | 120°C | 120°C |
| | Time | | | 1 h | 1 h | 1 h | 1 h | 0.75 h | 1 h |
| Thickness T of (thio)urethane film | | | µm | 310 | 310 | 310 | 310 | 310 | 310 |
| Content of boron element in thiourethane film | | | ppm | 39 | 39 | 39 | 39 | 39 | 39 |
| Storage elastic modulus E' at 40°C | | | MPa | 2498 | 2498 | 2498 | 2498 | 2498 | 2807 |
| Storage elastic modulus E' at 40°C x thickness T | | | MPa·mm | 774 | 774 | 774 | 774 | 774 | 870 |
| Restoring force per width of 1 m | | | N/m | 7.75 | 7.75 | 7.75 | 7.75 | 13.50 | 8.43 |

(continued)

| | | Unit | Example 1c | Example 2c | Example 3c | Example 4c | Example 5c | Example 6c |
|---|---|---|---|---|---|---|---|---|
| Evaluation | Contraction mark | | A | A | A | A | A | A |
| | Evaluation of production efficiency | | A | A | A | A | A | A |
| | Appearance evaluation during heating for 15 minutes at 145°C | | A | A | A | A | B | A |
| | Winding property evaluation (1) | | A | A | A | A | B | A |
| | Winding property evaluation (2) | | B | B | B | B | B | B |

Hereinafter, examples of the reference forms will be added.

A1. A thiourethane film containing: a cured product of a photopolymerizable composition containing a bifunctional or higher polythiol (A), an isocyanate compound (B), and a photopolymerization initiator (C), in which a product E' × T of a storage elastic modulus E' at 40°C and a thickness T of the thiourethane film is 50 MPa·mm or more and 1800 MPa·mm or less.

A2. A thiourethane film containing: a cured product of a photopolymerizable composition containing a bifunctional or higher polythiol (A), an isocyanate compound (B), and a photopolymerization initiator (C), in which a restoring force measured according to <Conditions> is 40.0 N/m or less,

<Conditions>

The thiourethane film is cut into a strip shape having a width of 1 cm and a length of 12 cm, one end (a) of the thiourethane film is fixed to a resin cylinder having an outer diameter of 10 cm with an adhesive tape, and the thiourethane film is wound around the resin cylinder. Next, a plate having a width of 1 cm and a length of 15 cm is installed horizontally such that it contacts one end (b) of the thiourethane film opposite to the one end (a). Next, one end (c) of the plate is overlapped by 1 cm in the length direction with the end portion of the thiourethane film on one end (b) side, and one end (d) of the plate opposite to the one end (c) is installed to be in contact with an upper side of a measurement axis of a digital force gauge. The plate is installed such that a portion of 7.5 cm from the one end (d) is fixed with clay and the plate is movable with a point fixed with the clay as a fulcrum. Next, a value G (g) of the digital force gauge when the thiourethane film is raised along a lower side of the plate by raising a height of the resin cylinder, the plate and a tangent of an outer circumference of the resin cylinder overlap each other, and a portion of 1 cm where the plate and the thiourethane film overlap each other is completely adhered is read, and the restoring force (N/m) of the thiourethane film is calculated using Equation (1).

$$\text{Restoring force (N/m)} = (G\ (g) \times 9.80665/1000) \times 100 \qquad \text{Equation (1):}$$

9.80665 in Equation (1) represents gravitational acceleration ($m/s^2$).

A3. The thiourethane film according to A1. or A2., in which the photopolymerization initiator (C) includes a base generator consisting of an organic boron anion and a counter cation.

A4. The thiourethane film according to A3., in which the base generator includes a compound represented by Formula (1).

[chem. 8]

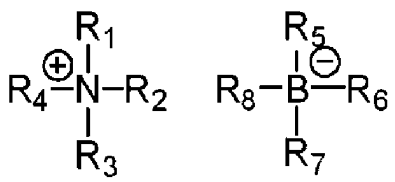

(1)

A5. The thiourethane film according to any one of A1. to A4., in which the thiourethane film contains a boron element.

A6. The thiourethane film according to any one of A1. to A5., in which a content of the photopolymerization initiator (C) is 500 ppm or more and 5000 ppm or less with respect to a total of the bifunctional or higher polythiol (A) and the isocyanate compound (B).

A7. The thiourethane film according to any one of A1. to A6., in which the photopolymerizable composition further contains a metal catalyst (D).

A8. The thiourethane film according to any one of A1. to A7., in which the photopolymerizable composition is irradiated with ultraviolet rays to polymerize a part of the photopolymerizable composition, and then the photopolymerizable composition is heated and further polymerized.

A9. The thiourethane film according to any one of A1. to A8., in which a thickness is 50 μm or more and 1000 μm or less.

A10. The thiourethane film according to any one of A1. to A9., in which the polythiol (A) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

A11. The thiourethane film according to any one of A1. to A10., in which the isocyanate compound (B) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

A12. The thiourethane film according to any one of A1. to A11., further containing: one or two selected from the group consisting of a hard coat layer and an anti-reflection layer.

A13. The thiourethane film according to any one of A1. to A12., in which a water contact angle of a surface of the thiourethane film is 50.0° or more and 90.0° or less.

A14. The thiourethane film according to any one of A1. to A13., further containing: an adhesive layer on one surface of the thiourethane film.

A15. A roll containing: the thiourethane film according to any one of A1. to A14.; and a core, in which the thiourethane film is wound in a roll shape around the core.

A16. A lens containing: the thiourethane film according to any one of A1. to A14.

A17. The lens according to A16., in which the thiourethane film and a lens substrate are in direct contact with each other.

B1. A polymerizable composition for forming a thiourethane film, containing: a bifunctional or higher polythiol (A); an isocyanate compound (B); and a photopolymerization initiator (C), in which a content of the photopolymerization initiator (C) is 250 ppm by mass or more with respect to a total amount of the bifunctional or higher polythiol (A) and the isocyanate compound (B) .

B2. The polymerizable composition for forming a thiourethane film according to B1., in which the photopolymerization initiator (C) contains boron.

B3. The polymerizable composition for forming a thiourethane film according to B1. or B2., in which the photopolymerization initiator (C) includes a base generator consisting of an organic boron anion and a counter cation.

B4. The polymerizable composition for forming a thiourethane film according to B3., in which the base generator includes a compound represented by Formula (1).

[chem. 9]

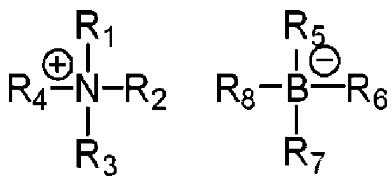

(1)

(In Formula (1), $R_1$ to $R_4$ each independently represent an alkyl group having 1 to 8 carbon atoms, $R_5$ to $R_8$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group.)

B5. The polymerizable composition for forming a thiourethane film according to any one of B1. to B4., in which the bifunctional or higher polythiol (A) includes a bifunctional polythiol and a trifunctional or higher polythiol.

B6. The polymerizable composition for forming a thiourethane film according to any one of B1. to B5., in which the bifunctional or higher polythiol (A) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

B7. The polymerizable composition for forming a thiourethane film according to any one of B1. to B6., in which the isocyanate compound (B) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

B8. The polymerizable composition for forming a thiourethane film according to any one of B1. to B7., in which an equivalent ratio of a thiol group in the bifunctional or higher polythiol (A) to an isocyanato group in the isocyanate compound (B) (thiol group/isocyanato group) is 0.8 or more and 1.2 or less.

B9. The polymerizable composition for forming a thiourethane film according to any one of B1. to B8., in which a total of a content of the bifunctional or higher polythiol (A) and a content of the isocyanate compound (B) is 50% by mass or more and less than 100% by mass when the entire polymerizable composition for forming a thiourethane film is 100% by mass.

B10. The polymerizable composition for forming a thiourethane film according to any one of B1. to B9., in which a yellowness (YI value) measured by the following Method 1 is less than 3.0.

(Method 1)

A semi-cured product sandwiched between two glass molds having a diameter of 7.7 cm and a plate thickness of 5 mm is obtained by producing a casting mold by fixing the glass molds with tape so that an interval therebetween is 2 mm, injecting the polymerizable composition for forming a thiourethane film into the casting mold, and irradiating the polymerizable composition with ultraviolet rays at an irradiation intensity of 186 mW and an integrated light amount of 1488 mJ for UVA and an irradiation intensity of 32.5 mW and an integrated light amount of 260 mJ for UVC. The obtained semi-cured product is heated at 120°C for 3 hours and then released from the glass mold to produce a thiourethane flat plate having a thickness of 2 mm, and yellowness (YI value) of the thiourethane flat plate is measured in accordance with JIS K7373: 2006.

B11. The polymerizable composition for forming a thiourethane film according to any one of B1. to B10., in which a haze measured by the following Method 2 is 1.0% or less.

(Method 2)

A semi-cured product sandwiched between two glass molds having a diameter of 7.7 cm and a plate thickness of 5 mm is obtained by producing a casting mold by fixing the glass molds with tape so that an interval therebetween is 2 mm, injecting the polymerizable composition for forming a thiourethane film into the casting mold, and irradiating the polymerizable composition with ultraviolet rays at an irradiation intensity of 186 mW and an integrated light amount of 1488 mJ for UVA and an irradiation intensity of 32.5 mW and an integrated light amount of 260 mJ for UVC. The obtained semi-cured product is heated at 120°C for 3 hours and then released from the glass mold to produce a thiourethane flat plate having a thickness of 2 mm, and a haze of the thiourethane flat plate is measured in accordance with JIS K7136:2000.

B12. The polymerizable composition for forming a thiourethane film according to any one of B1. to B11., in which a Young's modulus measured by the following Method 3 is 100 MPa or more and 5000 MPa or less.

(Method 3)

A semi-cured product sandwiched between two glass molds having a diameter of 7.7 cm and a plate thickness of 5 mm is obtained by producing a casting mold by fixing the glass molds with tape so that an interval therebetween is 2 mm, injecting the polymerizable composition for forming a thiourethane film into the casting mold, and irradiating the polymerizable composition with ultraviolet rays at an irradiation intensity of 186 mW and an integrated light amount of 1488 mJ for UVA and an irradiation intensity of 32.5 mW and an integrated light amount of 260 mJ for UVC. The obtained semi-cured product is heated at 120°C for 3 hours and then released from the glass mold to produce a thiourethane flat plate having a thickness of 2 mm, and a test piece having a length of 65 mm, a width of 25 mm, and a thickness of 2 mm is cut out from the obtained thiourethane flat plate. For the obtained test piece, a Young's modulus is measured using a tensile tester under conditions of a measurement temperature of 23°C, a measurement humidity of 50% RH, a tensile speed of 1 mm/min, and a distance between fulcrums of 34 mm, in accordance with JIS K7171: 2016.

B13. A thiourethane film containing: a cured product of the polymerizable composition for forming a thiourethane film according to any one of B1. to B12.

B14. The thiourethane film according to B13., in which a thickness is 50 $\mu$m or more and 1000 $\mu$m or less.

B15. The thiourethane film according to B13. or B14., further containing: an adhesive layer on one surface of the thiourethane film.

B16. The thiourethane film according to B15., in which the adhesive layer contains one or two or more selected from the group consisting of urethane (meth)acrylate, a (meth)acrylic monomer, a (meth)acrylic resin, a urethane resin, and an ester resin.

B17. The thiourethane film according to any one of B13. to B16., further containing: a hard coat layer on one surface of the thiourethane film.

B18. The thiourethane film according to B17., in which the hard coat layer is provided on one surface of the thiourethane film, and an adhesive layer and an optical substrate are provided on a surface opposite to the hard coat layer in this order.

B19. The thiourethane film according to B18., in which the optical substrate includes at least one selected from the group consisting of polythiourethane, poly(meth)acrylate, polycarbonate, polyallyl carbonate, polyethylene terephthalate, polytriacetyl cellulose, polyvinyl alcohol, polyester, polyamide, polyepoxy, polyepisulfide, and polyurethane.

B20. A lens containing: the thiourethane film according to any one of B13. to B19.

B21. Glasses including: the lens according to B20.

C1. A method for producing a (thio)urethane-based resin film, including: a first polymerization step of irradiating a film consisting of a photopolymerizable composition which contains an active-hydrogen compound and an isocyanate compound and is provided on a substrate with ultraviolet rays to polymerize a part of the photopolymerizable composition; and a second polymerization step of heating the photopolymerizable composition after the first polymerization step to further polymerize the photopolymerizable composition.

C2. The method for producing a (thio)urethane-based resin film according to C1., in which the photopolymerizable composition further contains a photopolymerization initiator.

C3. The method for producing a (thio)urethane-based resin film according to C1. or C2., in which the photopolymerizable composition further contains a metal catalyst.

C4. The method for producing a (thio)urethane-based resin film according to C3., further including: a viscosity adjustment step of adjusting a viscosity of a mixed solution A containing the active-hydrogen compound, the isocyanate compound, and the metal catalyst to 50 mPa·s or more and 700 mPa·s or less.

C5. The method for producing a (thio)urethane-based resin film according to C4., further including: a step of mixing the mixed solution A with a mixed solution B containing the isocyanate compound and the photopolymerization initiator after the viscosity adjustment step.

C6. The method for producing a (thio)urethane-based resin film according to any one of C1. to C5., in which in the first polymerization step, the film is irradiated with ultraviolet rays with an integrated light amount of 1000 mJ or more and 4000 mJ or less.

C7. The method for producing a (thio)urethane-based resin film according to any one of C1. to C6., in which in the second polymerization step, the heating is carried out at a temperature of 80°C or higher and 140°C or lower.

C8. The method for producing a (thio)urethane-based resin film according to any one of C1. to C7., in which a thickness of the (thio)urethane-based resin film is 50 μm or more and 3 mm or less.

C9. The method for producing a (thio)urethane-based resin film according to any one of C1. to C8., in which a water contact angle of a surface of the substrate is 60.0° or more and 100.0° or less.

C10. The method for producing a (thio)urethane-based resin film according to any one of C1. to C9., in which the substrate is a release film.

C11. The method for producing a (thio)urethane-based resin film according to C10., in which the release film includes at least one selected from the group consisting of polyethylene terephthalate and a fluororesin.

C12. The method for producing a (thio)urethane-based resin film according to any one of C1. to C11., in which the (thio)urethane-based resin film further includes a protective film on a surface opposite to the substrate.

C13. The method for producing a (thio)urethane-based resin film according to any one of C1. to C12., in which the isocyanate compound includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

C14. The method for producing a (thio)urethane-based resin film according to any one of C1. to C13., in which the active-hydrogen compound includes at least one selected from the group consisting of a polythiol, a polyol, and a polyamine.

C15. The method for producing a (thio)urethane-based resin film according to any one of C1. to C14., in which the (thio)urethane-based resin film further includes a primer layer on a surface opposite to the substrate.

C16. The method for producing a (thio)urethane-based resin film according to C15., in which the primer layer contains a polyurethane-based aqueous dispersion.

C17. The method for producing a (thio)urethane-based resin film according to C15. or C16., in which the (thio)urethane-based resin film further includes at least one selected from the group consisting of a hard coat layer and an anti-reflection layer.

C18. A method for producing a laminated lens, including: a step of obtaining a (thio)urethane-based resin film by the method for producing a (thio)urethane-based resin film according to any one of C1. to C17.; and a step of bonding the obtained (thio)urethane-based resin film to a lens substrate.

C19. The method for producing a laminated lens according to C18., in which the lens substrate includes at least one selected from the group consisting of poly(meth)acrylate, polyethylene terephthalate, polycarbonate, polytriacetyl cellulose, polyvinyl alcohol, polyester, polyamide, polyepoxy, polyepisulfide, polyurethane, and polythiourethane.

C20. The method for producing a laminated lens according to C18. or C19., in which in the bonding step, the (thio) urethane-based resin film is bonded to the lens substrate by one or two selected from the group consisting of vacuum forming and pressure forming.

Priority is claimed based on Japanese Patent Application No. 2023-081879 and Japanese Patent Application No. 2023-081880 which are filed on May 17, 2023 and Japanese Patent Application No. 2023-170313 filed on September 29, 2023, the entire disclosure of which is incorporated herein.

REFERENCE SIGNS LIST

101 thiourethane film test piece
102 resin cylinder
103 plate
104 digital force gauge
105 jack

**Claims**

**1.** A thiourethane film comprising:

a cured product of a photopolymerizable composition containing a bifunctional or higher polythiol (A), an isocyanate compound (B), and a photopolymerization initiator (C),
wherein a product E' × T of a storage elastic modulus E' at 40°C and a thickness T of the thiourethane film is 50 MPa·mm or more and 1800 MPa·mm or less.

**2.** The thiourethane film according to Claim 1,

wherein a restoring force measured under the following <Conditions> is 40.0 N/m or less,
<Conditions>
the thiourethane film is cut into a strip shape having a width of 1 cm and a length of 12 cm, one end (a) of the thiourethane film is fixed to a resin cylinder having an outer diameter of 10 cm with an adhesive tape, and the thiourethane film is wound around the resin cylinder,
next, a plate having a width of 1 cm and a length of 15 cm is installed horizontally such that it contacts one end (b) of the thiourethane film opposite to the one end (a),
next, one end (c) of the plate is overlapped by 1 cm in the length direction with the end portion of the thiourethane film on one end (b) side, and one end (d) of the plate opposite to the one end (c) is installed to be in contact with an upper side of a measurement axis of a digital force gauge,
the plate is installed such that a portion of 7.5 cm from the one end (d) is fixed with clay and the plate is movable with a point fixed with the clay as a fulcrum, and
next, a value G (g) of the digital force gauge when the thiourethane film is raised along a lower side of the plate by raising a height of the resin cylinder, the plate and a tangent of an outer circumference of the resin cylinder overlap each other, and a portion of 1 cm where the plate and the thiourethane film overlap each other is completely adhered is read, and the restoring force (N/m) of the thiourethane film is calculated using Equation (1),

Equation (1): Restoring force (N/m) = (G (g) × 9.80665/1000) × 100 Equation (1):

where 9.80665 in Equation (1) represents gravitational acceleration (m/s$^2$).

3. The thiourethane film according to Claim 1 or 2, further comprising: a boron element.

4. The thiourethane film according to Claim 3, wherein a boron element content in the thiourethane film is 5 ppm or more and 200 ppm or less.

5. The thiourethane film according to any one of Claims 1 to 4, wherein the photopolymerization initiator (C) contains boron.

6. The thiourethane film according to any one of Claims 1 to 5, wherein the photopolymerization initiator (C) includes a base generator consisting of an organic boron anion and a counter cation.

7. The thiourethane film according to Claim 6,

wherein the base generator includes one or two or more selected from the group consisting of a compound represented by Formula (1) and a compound represented by Formula (2),

[chem. 1]

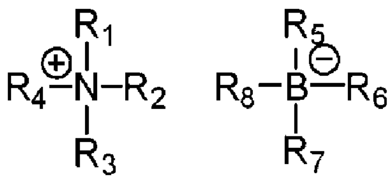

(1)

(in Formula (1), $R_1$ to $R_4$ each independently represent an alkyl group having 1 to 8 carbon atoms, $R_5$ to $R_8$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group)

[chem. 2]

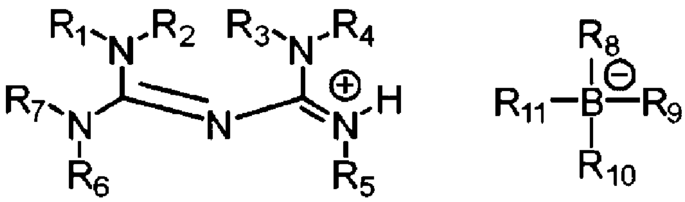

(2)

(in Formula (2), $R_1$ to $R_7$ each independently represent an alkyl group having 1 to 8 carbon atoms or a cycloalkyl group having 3 to 8 carbon atoms, $R_8$ to $R_{11}$ each independently represent an alkyl group having 1 to 8 carbon atoms, a phenyl group, a naphthyl group, an anthracenyl group, or a phenanthryl group, and the phenyl group, the naphthyl group, the anthracenyl group, and the phenanthryl group may be substituted with a halogen atom, an alkyl group, an aryl group, an alkenyl group, a cycloalkyl group, or a heterocyclic group).

8. The thiourethane film according to any one of Claims 1 to 7, wherein a content of the photopolymerization initiator (C) is 250 ppm by mass or more with respect to a total amount of the bifunctional or higher polythiol (A) and the isocyanate compound (B) .

**9.** The thiourethane film according to any one of Claims 1 to 8,
wherein a total of a content of the bifunctional or higher polythiol (A) and a content of the isocyanate compound (B) is 50% by mass or more and less than 100% by mass when the entire photopolymerizable composition is 100% by mass.

**10.** The thiourethane film according to any one of Claims 1 to 9,
wherein the photopolymerizable composition further contains a metal catalyst (D).

**11.** The thiourethane film according to any one of Claims 1 to 10,
wherein the thiourethane film is obtained by polymerizing a part of the photopolymerizable composition by irradiating the photopolymerizable composition with ultraviolet rays and then further polymerizing the photopolymerizable composition by heating.

**12.** The thiourethane film according to any one of Claims 1 to 11,
wherein the thickness T is 50 μm or more and 3000 μm or less.

**13.** The thiourethane film according to any one of Claims 1 to 12,
wherein the bifunctional or higher polythiol (A) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio) methane.

**14.** The thiourethane film according to any one of Claims 1 to 13,
wherein the isocyanate compound (B) includes at least one selected from the group consisting of pentamethylene diisocyanate, hexamethylene diisocyanate, xylylene diisocyanate, isophorone diisocyanate, bis(isocyanatomethyl) cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

**15.** The thiourethane film according to any one of Claims 1 to 14,
wherein an equivalent ratio (thiol group/isocyanato group) of a thiol group in the bifunctional or higher polythiol (A) to an isocyanato group in the isocyanate compound (B) is 0.8 or more and 1.2 or less.

**16.** The thiourethane film according to any one of Claims 1 to 15,
wherein the bifunctional or higher polythiol (A) includes a bifunctional polythiol and a trifunctional or higher polythiol.

**17.** The thiourethane film according to any one of Claims 1 to 16, further comprising:
one or two or more selected from the group consisting of a hard coat layer and an anti-reflection layer.

**18.** The thiourethane film according to any one of Claims 1 to 17,
wherein a water contact angle of a surface of the thiourethane film is 50.0° or more and 90.0° or less.

**19.** The thiourethane film according to any one of Claims 1 to 18, further comprising:
an adhesive layer on one surface of the thiourethane film.

**20.** A roll comprising:

the thiourethane film according to any one of Claims 1 to 19; and
a core,
wherein the thiourethane film is wound in a roll shape around the core.

**21.** A lens comprising:
the thiourethane film according to any one of Claims 1 to 19.

**22.** The lens according to Claim 21,

wherein the thiourethane film and a lens substrate are in direct contact with each other.

**23.** Glasses comprising:
the lens according to Claim 21 or 22.

**24.** A method for producing a (thio)urethane-based resin film, comprising:

a first polymerization step of irradiating a film consisting of a photopolymerizable composition which contains an active-hydrogen compound, an isocyanate compound, a photopolymerization initiator, and a metal catalyst and is provided on a substrate with ultraviolet rays to polymerize a part of the photopolymerizable composition; and
a second polymerization step of heating the photopolymerizable composition after the first polymerization step to further polymerize the photopolymerizable composition.

**25.** The method for producing a (thio)urethane-based resin film according to Claim 24, further comprising:
a viscosity adjustment step of adjusting a viscosity of a mixed solution A containing the active-hydrogen compound, the isocyanate compound, and the metal catalyst to 50 mPa·s or more and 2000 mPa·s or less.

**26.** The method for producing a (thio)urethane-based resin film according to Claim 25, further comprising:
a step of mixing the mixed solution A with a mixed solution B containing the isocyanate compound and the photopolymerization initiator after the viscosity adjustment step.

**27.** The method for producing a (thio)urethane-based resin film according to any one of Claims 24 to 26,
wherein the substrate is a release film.

**28.** The method for producing a (thio)urethane-based resin film according to Claim 27,
wherein the release film includes at least one selected from the group consisting of polyethylene terephthalate and a fluororesin.

**29.** The method for producing a (thio)urethane-based resin film according to any one of Claims 24 to 28,
wherein the (thio)urethane-based resin film further includes a protective film on a surface opposite to the substrate.

**30.** A method for producing a laminated lens, comprising:

a step of obtaining a (thio)urethane-based resin film by the method for producing a (thio)urethane-based resin film according to any one of Claims 24 to 29; and
a step of bonding the obtained (thio)urethane-based resin film to a lens substrate.

**31.** The method for producing a laminated lens according to Claim 30,
wherein the lens substrate includes at least one selected from the group consisting of poly(meth)acrylate, polyethylene terephthalate, polycarbonate, polytriacetyl cellulose, polyvinyl alcohol, polyester, polyamide, polyepoxy, polyepisulfide, polyurethane, and polythiourethane.

**32.** The method for producing a laminated lens according to Claim 30 or 31,
wherein in the bonding step, the (thio)urethane-based resin film is bonded to the lens substrate by one or two selected from the group consisting of vacuum forming and pressure forming.

[Fig.1]

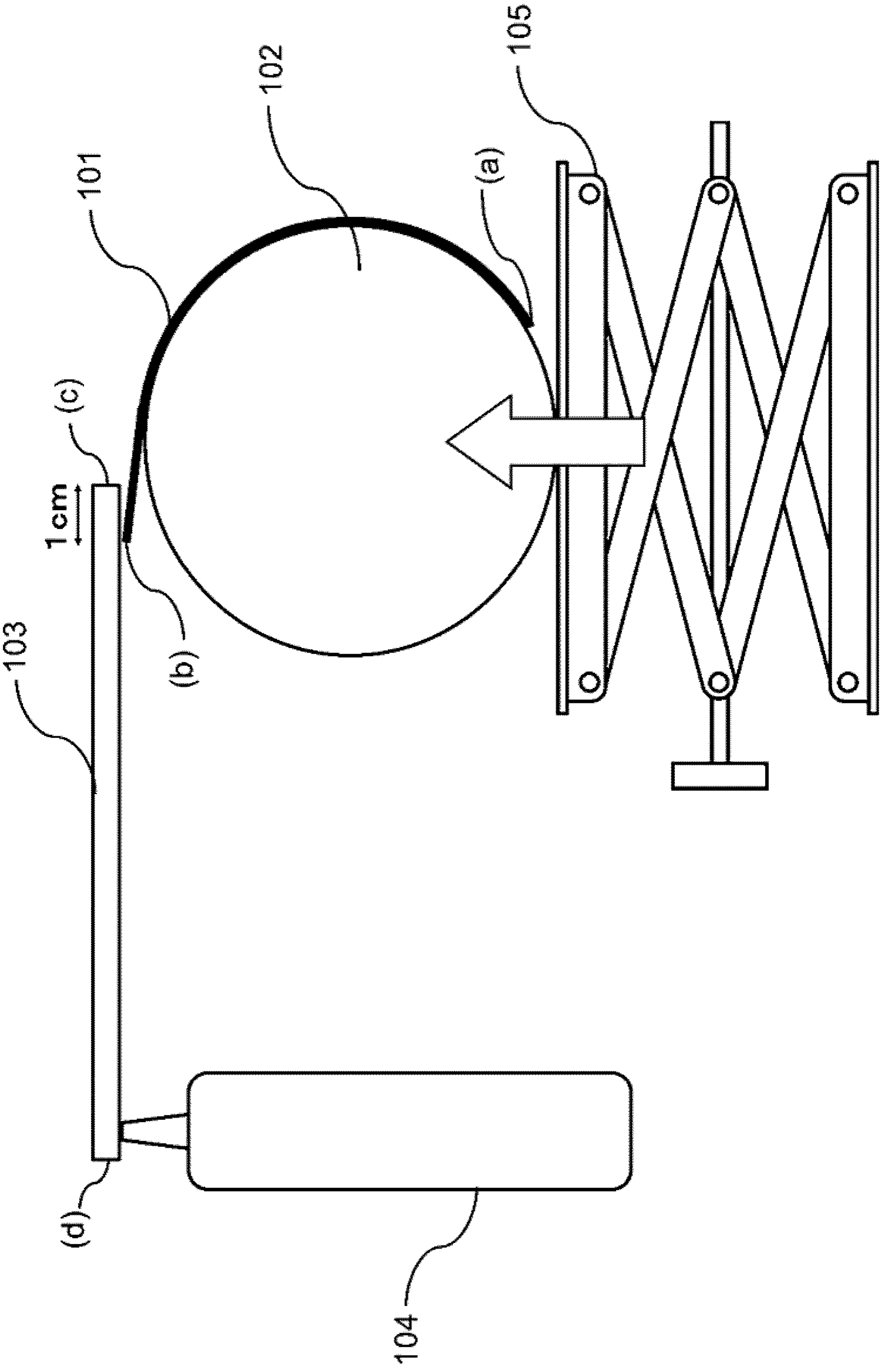

[Fig.2]

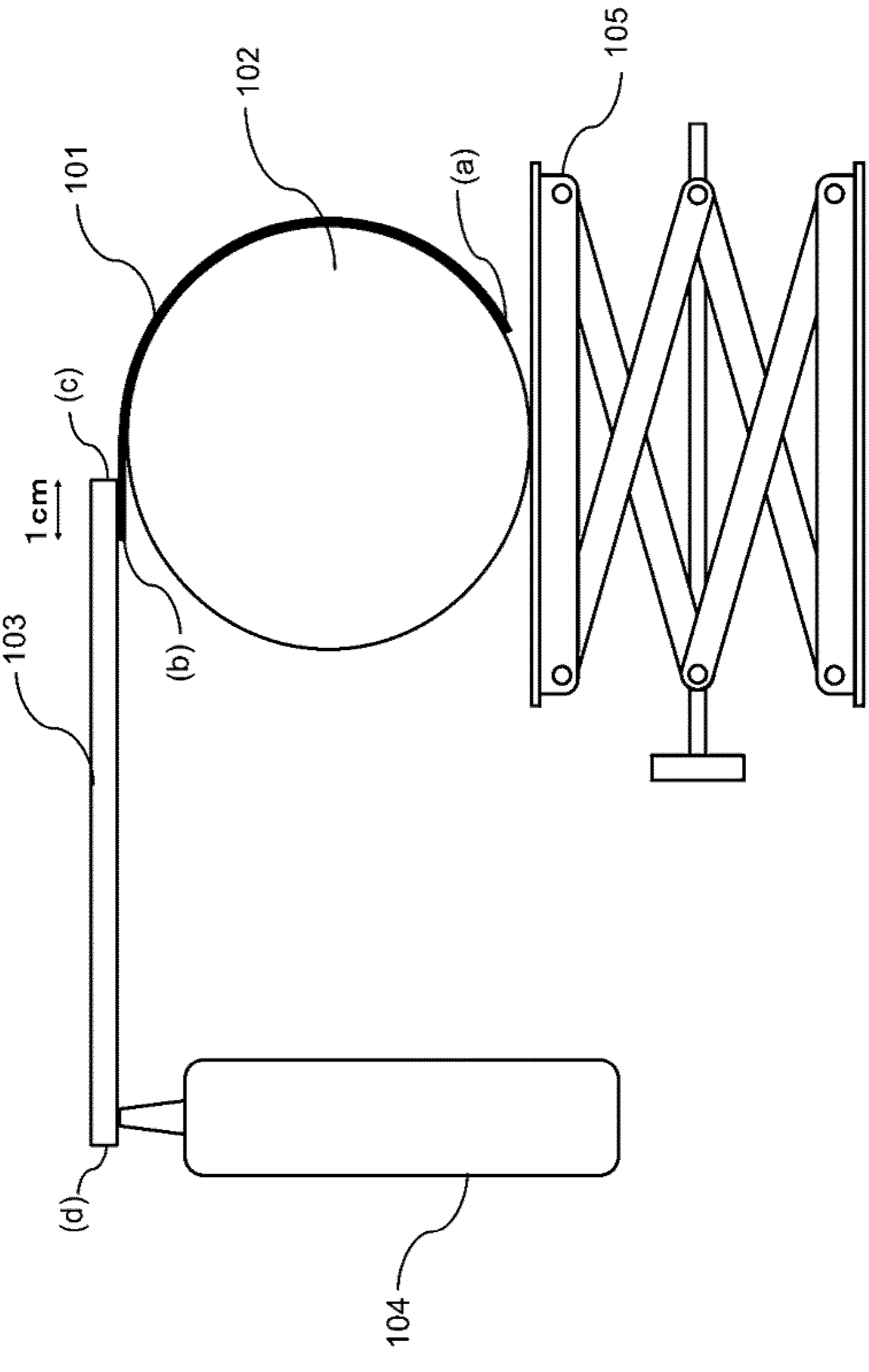

## INTERNATIONAL SEARCH REPORT

International application No.
**PCT/JP2024/017943**

### A. CLASSIFICATION OF SUBJECT MATTER

***C08J 5/18***(2006.01)i; ***B29C 51/10***(2006.01)i; ***B32B 27/40***(2006.01)i; ***C08G 18/08***(2006.01)i; ***C08G 18/38***(2006.01)i; ***C08G 18/73***(2006.01)i; ***C08G 18/75***(2006.01)i; ***C08G 18/76***(2006.01)i; ***G02B 1/04***(2006.01)i; ***G02C 7/00***(2006.01)i; ***G02C 7/02***(2006.01)i

FI: C08J5/18 CFF; B29C51/10; B32B27/40; C08G18/08; C08G18/08 038; C08G18/38 076; C08G18/73; C08G18/75; C08G18/76; G02B1/04; G02C7/00; G02C7/02

According to International Patent Classification (IPC) or to both national classification and IPC

### B. FIELDS SEARCHED

Minimum documentation searched (classification system followed by classification symbols)

C08J5/18; B29C51/10; B32B27/40; C08G18/08; C08G18/38; C08G18/73; C08G18/75; C08G18/76; G02B1/04; G02C7/00; G02C7/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2023/063398 A1 (MITSUI CHEMICALS, INC.) 20 April 2023 (2023-04-20) claims, paragraphs [0083], [0140], [0141], [0144], [0157], [0159], [0226], [0275]-[0365], examples | 1-32 |
| X | SHIN, Junghwan et al., Properties of polythiourethanes prepared by thiol-isocyanate click reaction, Journal of Applied Polymer Science, 2018, p. 46070 (1of 8)-46070 (8 of 8) Scheme 1, figure 2 , etc. | 1-6, 8, 9, 11-15, 18, 24-26 |
| X | JP 2003-535197 A (AKZO NOBEL N.V.) 25 November 2003 (2003-11-25) claims, paragraphs [0045]-[0055], examples | 24-26 |
| A | US 2019/0300641 A1 (BOARD OF REGENTS, THE UNIVERSITY OF TEXAS SYSTEM) 03 October 2019 (2019-10-03) claims, examples | 1-32 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017943**

| Patent document cited in search report | Publication date (day/month/year) | Patent family member(s) | Publication date (day/month/year) |
|---|---|---|---|
| WO 2023/063398 A1 | 20 April 2023 | KR 10-2024-0053641 A<br>TW 202317708 A | |
| JP 2003-535197 A | 25 November 2003 | US 2002/0032248 A1<br>claims, paragraphs [0056]-[0099], examples<br>JP 2004-508427 A<br>US 2003/0181625 A1<br>US 2003/0212164 A1<br>WO 2001/092362 A1<br>WO 2001/092363 A1<br>EP 1285012 A1<br>EP 1285013 A1<br>AU 6032501 A<br>AU 6747901 A<br>CN 1432031 A<br>CN 1430634 A<br>KR 10-2003-0001477 A<br>KR 10-0728462 B1 | |
| US 2019/0300641 A1 | 03 October 2019 | WO 2018/038869 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022158759 A
- JP 2023081879 A
- JP 2023081880 A
- JP 2023170313 A